(19) Europäisches Patentamt
European Patent Office
Office européen des brevets

(11) **EP 4 036 521 A1**

(12) **EUROPEAN PATENT APPLICATION**
published in accordance with Art. 153(4) EPC

(43) Date of publication:
**03.08.2022 Bulletin 2022/31**

(21) Application number: **20870098.9**

(22) Date of filing: **03.08.2020**

(51) International Patent Classification (IPC):
*G01C 3/06* (2006.01)   *G01S 7/486* (2020.01)
*G01S 17/10* (2020.01)   *G01S 17/89* (2020.01)

(52) Cooperative Patent Classification (CPC):
**G01C 3/06; G01S 7/486; G01S 17/10; G01S 17/89**

(86) International application number:
**PCT/JP2020/029674**

(87) International publication number:
**WO 2021/059748 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **27.09.2019   JP 2019176862**

(71) Applicant: **Sony Semiconductor Solutions Corporation**
**Atsugi-shi Kanagawa 243-0014 (JP)**

(72) Inventor: **ONO, Hiroaki**
**Atsugi-shi, Kanagawa 243-0014 (JP)**

(74) Representative: **Müller Hoffmann & Partner Patentanwälte mbB**
**St.-Martin-Strasse 58**
**81541 München (DE)**

(54)   **INFORMATION PROCESSING DEVICE, CORRECTION METHOD, AND PROGRAM**

(57)   An information processing apparatus (10a) according to the present disclosure includes a control unit (60). The control unit (60) detects a saturation region of light reception image information generated based on a pixel signal output from a light receiving sensor, the light receiving sensor being configured to receive reflected light being reflection, by a measurement object, of projection light projected from a light source. The pixel signal is used to calculate a distance to the measurement object. The saturation region is a region of light reception image information generated based on the pixel signal which is saturated. The control unit (60) corrects the light reception image information of the saturation region based on the pixel signal.

FIG.16

**Description**

Field

The present disclosure relates to an information processing apparatus, a correction method, and a program.

Background

There is known a distance measuring method called Time of Flight (ToF) that measures a distance to a measurement object based on a time from a point of light projection from a light source to a point of reception of reflected light from the measurement object by a light receiving unit. In the distance measurement of the ToF method, the light received by the light receiving unit includes ambient light attributed to sunlight and the like in addition to reflected light being reflection of the light projected from a light source, which is effective for distance measurement. A distance measuring device (hereinafter, the ToF distance measuring device) that performs distance measurement by the ToF method acquires a distance to the measurement object based on a reflected light component obtained by removing a component of ambient light from light received by the light receiving unit.

Citation List

Patent Literature

Patent Literature 1: JP 2017-133853 A

Summary

Technical Problem

Meanwhile, there is a case where it is desired to use an image formed by light including an ambient light component or an image formed by light of a reflected light component from which the ambient light component has been removed, which is acquired in the ToF distance measuring device, for purposes other than distance measurement. Furthermore, in the ToF type distance measuring device, there is a case where the light received by the light receiving unit has high intensity, leading to saturation of the amount of light received by the light receiving unit.
In this manner, occurrence of saturation of the amount of light received by the light receiving unit in a case where an image acquired in the ToF distance measuring device is secondarily used can deteriorate the accuracy of the acquired image, leading to inconvenience in the secondary use of the image.
In view of this, an object of the present disclosure is to provide an information processing apparatus, a correction method, and a program capable of suppressing deterioration in accuracy of an image acquired by the ToF distance measuring device.

Solution to Problem

According to the present disclosure, an information processing apparatus is provided. The information processing apparatus according to the present disclosure includes a control unit. The control unit detects a saturation region of light reception image information generated based on a pixel signal output from a light receiving sensor, the light receiving sensor being configured to receive reflected light being reflection, by a measurement object, of projection light projected from a light source. The pixel signal is used to calculate a distance to the measurement object. The saturation region is a region of light reception image information generated based on the pixel signal which is saturated. The control unit corrects the light reception image information of the saturation region based on the pixel signal.

Brief Description of Drawings

FIG. 1 is a block diagram illustrating an example of a configuration of an electronic device using a distance measuring device applied to each embodiment.
FIG. 2 is a diagram illustrating a principle of an indirect ToF method.
FIG. 3 is a diagram illustrating an example of a case where projection light projected from a light source unit is a rectangular wave modulated by PWM.

FIG. 4 is a diagram illustrating an example of an amount of light received by a light receiving unit.

FIG. 5 is a diagram illustrating a first method of acquiring each light amount value and calculating each piece of information applied to each embodiment.

FIG. 6 is a diagram illustrating a second method of acquiring each light amount value and calculating each piece of information applied to each embodiment.

FIG. 7 is a diagram illustrating an example of an exposure control signal in each phase.

FIG. 8 is a diagram illustrating an example of exposure periods of a tap A and a tap B at phases of 0°, 90°, 180°, and 270° for each light receiving unit (for each light receiving element).

FIG. 9 is a diagram illustrating light reception timing by a light receiving unit 12.

FIG. 10 is a diagram illustrating a third method of acquiring each light amount value and calculating each piece of information applied to each embodiment.

FIG. 11 is a block diagram illustrating a configuration of an example of an electronic device applied to each embodiment.

FIG. 12 is a block diagram illustrating an example of a configuration of a sensor unit applied to each embodiment.

FIG. 13 is a circuit diagram illustrating a configuration of an example of a pixel applied to each embodiment.

FIG. 14 is a diagram illustrating an example in which a sensor unit applied to each embodiment is formed by a stacked CIS having a layer structure.

FIG. 15 is a diagram illustrating an example in which a sensor unit applied to each embodiment is formed by a stacked CIS having a layer structure.

FIG. 16 is a diagram illustrating an example of a correction method according to a first embodiment of the present disclosure.

FIG. 17 is a functional block diagram of an example illustrating functions of the distance measuring device according to the first embodiment of the present disclosure.

FIG. 18 is a diagram illustrating a method of calculating reflected light image information in the 2-tap method (4 phase).

FIG. 19 is a diagram illustrating a saturation value estimated by a saturation value estimation unit.

FIG. 20 is a diagram illustrating correction of a pixel signal by a correction region compensation unit.

FIG. 21 is a diagram illustrating an example of reflected light image information before correction by a saturation region compensation unit.

FIG. 22 is a diagram illustrating an example of reflected light image information after correction by the saturation region compensation unit.

FIG. 23 is a flowchart illustrating an example of a correction process in the distance measuring device according to the first embodiment.

FIG. 24 is a block diagram illustrating an example of functions of a distance measuring device according to a second embodiment.

FIG. 25 is a diagram illustrating correction of a saturation region by a saturation region compensation unit.

FIG. 26 is a flowchart illustrating an example of a correction process in the distance measuring device according to the second embodiment.

FIG. 27 is a block diagram illustrating an example of functions of a distance measuring device according to a third embodiment.

FIG. 28 is a flowchart illustrating an example of a correction process in the distance measuring device according to the third embodiment.

Description of Embodiments

Embodiments of the present disclosure will be described below in detail with reference to the drawings. In each of the following embodiments, the same parts are denoted by the same reference symbols, and a repetitive description thereof will be omitted.

The present disclosure will be described in the following order.

1. Introduction

 1.1. Configuration common to each embodiment
 1.2. Distance measurement by indirect ToF method applied to each embodiment
 1.3. Configuration applied to each embodiment

2. First embodiment

 2.1. Outline of correction process

2.2. Configuration example of distance measuring device

2.3. Correction process in distance measuring device

3. Second embodiment

3.1. Configuration example of distance measuring device

3.2. Correction process in distance measuring device

4. Third embodiment

4.1. Configuration example of distance measuring device

4.2. Correction process in distance measuring device

5. Modification

6. Conclusion

<1. Introduction>

<1.1. Configuration common to each embodiment>

The present disclosure is suitable for use in a technique of performing distance measurement using light. Prior to the description of the embodiment of the present disclosure, an indirect time of flight (ToF) method will be described as one of distance measurement methods applied to the embodiment in order to facilitate understanding. The indirect ToF method is a technique of irradiating a measurement object with light from a light source (for example, laser light in an infrared region) modulated by, for example, pulse width modulation (PWM), receiving the reflected light by a light receiving element, and measuring a distance to the measurement object based on a phase difference in the received reflected light.

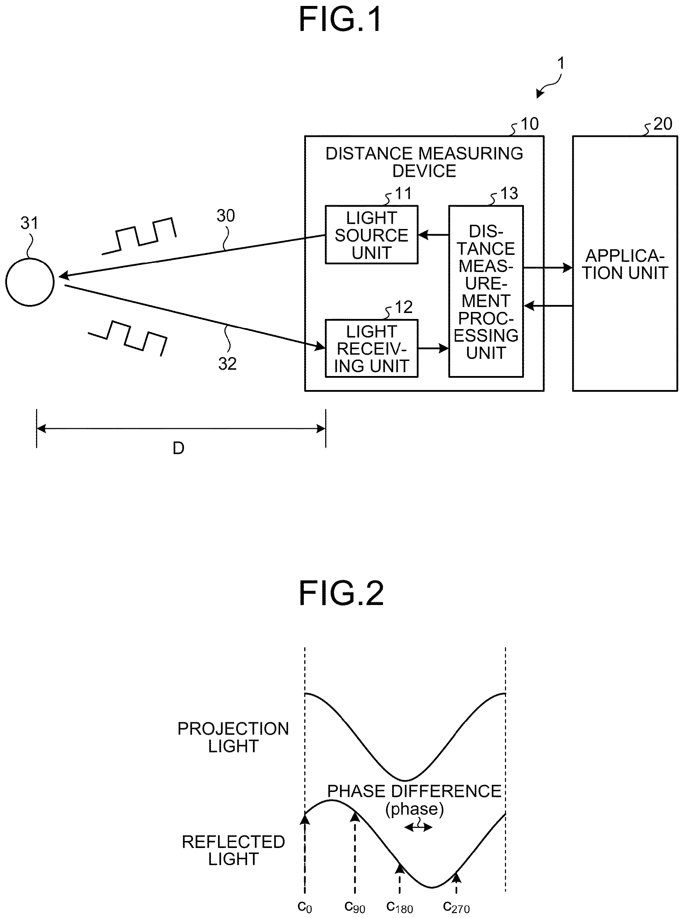

FIG. 1 is a block diagram illustrating an example of a configuration of an electronic device using a distance measuring device applied to each embodiment. In FIG. 1, an electronic device 1 includes a distance measuring device 10 and an application unit 20. The application unit 20 is implemented, for example, by a program operating on a central processing unit (CPU), requests the distance measuring device 10 to execute distance measurement, and receives from the distance measuring device 10 information such as distance information which is a result of the distance measurement.

The distance measuring device 10 includes a light source unit 11, a light receiving unit 12, and a distance measurement processing unit 13. The light source unit 11 includes: light emitting element that emits light having a wavelength in an infrared region; and a drive circuit that drives the light emitting element to emit light, for example. For example, a light emitting diode (LED) may be applied as the light emitting element included in the light source unit 11. The light emitting element is not limited thereto, and a vertical cavity surface emitting laser (VCSEL) in which a plurality of light emitting elements is formed in an array may be applied as the light emitting element included in the light source unit 11. Hereinafter, unless otherwise specified, "the light emitting element of the light source unit 11 emits light" will be described as "the light source unit 11 emits light" or the like.

The light receiving unit 12 includes: a light receiving element that detects light having a wavelength in an infrared region; and a signal processing circuit that outputs a pixel signal corresponding to the light detected by the light receiving element, for example. A photodiode may be applied as the light receiving element included in the light receiving unit 12. Hereinafter, unless otherwise specified, "the light receiving element included in the light receiving unit 12 receives light" will be described as "the light receiving unit 12 receives light" or the like.

The distance measurement processing unit 13 executes a distance measurement process in the distance measuring device 10 in response to a distance measurement instruction from the application unit 20, for example. For example, the distance measurement processing unit 13 generates a light source control signal for driving the light source unit 11 and supplies the generated light source control signal to the light source unit 11. Furthermore, the distance measurement processing unit 13 controls light reception by the light receiving unit 12 in synchronization with a light source control signal supplied to the light source unit 11. For example, the distance measurement processing unit 13 generates an exposure control signal that controls an exposure period in the light receiving unit 12 in synchronization with the light source control signal, and supplies the generated signal to the light receiving unit 12. The light receiving unit 12 outputs a valid pixel signal within the exposure period indicated by the exposure control signal.

The distance measurement processing unit 13 calculates distance information based on the pixel signal output from the light receiving unit 12 in accordance with light reception. Furthermore, the distance measurement processing unit 13 may generate predetermined image information based on the pixel signal. The distance measurement processing unit 13 passes, to the application unit 20, the distance information and the image information calculated and generated based on the pixel signal.

In such a configuration, the distance measurement processing unit 13 generates a light source control signal for driving the light source unit 11 in accordance with an instruction to execute distance measurement from the application unit 20, for example, and supplies the generated light source control signal to the light source unit 11. Here, the distance measurement processing unit 13 generates a light source control signal modulated into a rectangular wave having a predetermined duty by PWM, and supplies the light source control signal to the light source unit 11. At the same time, the distance measurement processing unit 13 controls light reception by the light receiving unit 12 based on an exposure control signal synchronized with the light source control signal.

In the distance measuring device 10, the light source unit 11 emits light modulated in accordance with the light source control signal generated by the distance measurement processing unit 13. In the example of FIG. 1, the light source unit 11 blinks based on a predetermined duty and emits light in accordance with the light source control signal. The light emitted from the light source unit 11 is projected from the light source unit 11 as projection light 30. The projection light 30 is reflected by a measurement object 31, for example, and is received by the light receiving unit 12 as reflected light 32. The light receiving unit 12 supplies a pixel signal corresponding to the reception of the reflected light 32 to the distance measurement processing unit 13. In practice, the light receiving unit 12 receives ambient light in the surroundings in addition to the reflected light 32, and the pixel signal includes a component of the ambient light together with a component of the reflected light 32.

The distance measurement processing unit 13 executes light reception by the light receiving unit 12 a plurality of times at different phases for each light receiving element. The distance measurement processing unit 13 calculates a distance D to the measurement object based on a difference between pixel signals due to light reception at different phases. Furthermore, the distance measurement processing unit 13 calculates: first image information obtained by extracting the component of the reflected light 32 based on the difference between the pixel signals; and second image information including the component of the reflected light 32 and the component of the ambient light. Hereinafter, the first image information is referred to as reflected light image information, and a value of each pixel of the reflected light image information is referred to as a pixel value Confidence (or a Confidence value). In addition, the second image information is referred to as IR image information, and a value of each pixel of the IR image information is referred to as a pixel value IR (or IR value). In addition, the reflected light image information and the IR image information are collectively referred to as light reception image information.

<1.2. Distance measurement by indirect ToF method applied to each embodiment>

Next, distance measurement by the indirect ToF method applied to each embodiment will be described. FIG. 2 is a diagram illustrating the principle of the indirect ToF method. In FIG. 2, light modulated by a sine wave is used as the projection light 30 that is projected from the light source unit 11. The reflected light 32 is ideally a sine wave having a phase difference (phase) corresponding to the distance D with respect to the projection light 30.

The distance measurement processing unit 13 performs sampling a plurality of times for each of phases on the pixel signal that has received the reflected light 32, and acquires a light amount value (pixel signal value) indicating the light amount for each sampling. In the example of FIG. 2, light amount values $C_0$, $C_{90}$, $C_{180}$, and $C_{270}$ are acquired in individual phases, namely, a phase of 0°, a phase of 90°, a phase of 180°, and a phase of 270°, respectively, having a phase difference 90° from each other with respect to the projection light 30. In the indirect ToF method, distance information is calculated based on a difference between light amount values of a set having phase difference 180° among individual phases of 0°, 90°, 180°, and 270°.

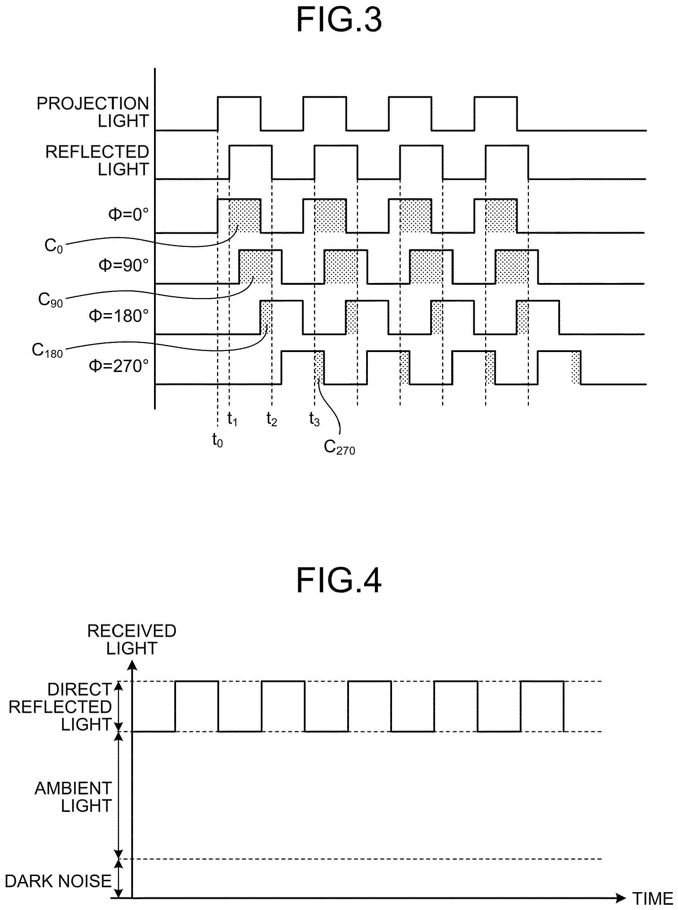

A method of calculating distance information in the indirect ToF method will be described more specifically with reference to FIG. 3. FIG. 3 is a diagram illustrating an example of a case where the projection light 30 from the light source unit 11 is a rectangular wave modulated by PWM. FIG. 3 illustrates, from above, the projection light 30 from the light source unit 11 and the reflected light 32 reaching the light receiving unit 12. As illustrated in the upper part of FIG. 3, the light source unit 11 periodically blinks at a predetermined duty to allow the projection light 30 to go out.

FIG. 3 further illustrates exposure control signals at the phase 0° (described as $\Phi = 0°$), the phase 90° (described as $\Phi = 90°$), the phase 180° (described as $\Phi = 180°$), and the phase 270° (described as $\Phi = 270°$) in the light receiving unit 12. For example, a period during which the exposure control signal is in a high state is an exposure period during which the light receiving element of the light receiving unit 12 outputs a valid pixel signal.

In the example of FIG. 3, the projection light 30 is projected from the light source unit 11 at time point $t_0$, and the reflected light 32 being reflection of the projection light 30 by the measurement object reaches the light receiving unit 12 at time point $t_1$ after the delay corresponding to the distance D from time point $t_0$ to the measurement object.

On the other hand, in accordance with the exposure control signal from the distance measurement processing unit 13, the light receiving unit 12 starts an exposure period with phase 0° in synchronization with time point $t_0$ of the projection timing of the projection light 30 in the light source unit 11. Similarly, the light receiving unit 12 starts exposure periods with the phase 90°, the phase 180°, and the phase 270° in accordance with the exposure control signal from the distance measurement processing unit 13. Here, the exposure period in each phase follows the duty of the projection light 30. Although the example of FIG. 3 is an exemplary case in which the exposure periods of individual phases are temporally parallel for the sake of explanation, the light receiving unit 12 operates, in practice, such that the exposure periods of the individual phases are sequentially designated, and the light amount values $C_0$, $C_{90}$, $C_{180}$, and $C_{270}$ of the individual phases are acquired.

In the example of FIG. 3, the arrival timings of the reflected light 32 are time points $t_1$, $t_2$, $t_3$,..., and the light amount value $C_0$ at the phase 0° is acquired as an integral value of the received light amount from the time point $t_0$ to the end time point of the exposure period including the time point $t_0$ at the phase 0°. On the other hand, in the phase 180° in which the phase is different from the phase 0° by 180°, the light amount value $C_{180}$ is acquired as an integral value of the received light amount from the start time point of the exposure period at the phase 180° to the time point $t_2$ of the falling of the reflected light 32 included in the exposure period.

Also for the phase C90 and the phase 270° having a phase difference 180° from the phase 90°, the integral value of the received light amount in the period in which the reflected light 32 arrives within each exposure period is acquired as light amount values $C_{90}$ and $C_{270}$, similarly to the case of the phases 0° and 180° described above.

Among these light amount values $C_0$, $C_{90}$, $C_{180}$, and $C_{270}$, as shown in the following Formulas (1) and (2), a difference I and a difference Q are obtained based on a combination of light amount values having phase difference 180°.

$$I = C_0 - C_{180} \tag{1}$$

$$Q = C_{90} - C_{270} \tag{2}$$

Based on these differences I and Q, the phase difference (phase) is calculated by the following Formula (3). In the Formula (3), the phase difference (phase) is defined in a range of ($0 \leq$ phase $< 2\pi$).

$$phase = \tan^{-1}(Q/I) \tag{3}$$

The distance information Depth is calculated by the following Formula (4) using the phase difference (phase) and a predetermined coefficient (range).

$$Depth = (phase \times range)/2\pi \tag{4}$$

Furthermore, based on the differences I and Q, the component of the reflected light 32 (pixel value Confidence of the reflected light image information) can be extracted from the component of the light received by the light receiving unit 12. The pixel value Confidence of the reflected light image information is calculated by the following Formula (5) using absolute values of the differences I and Q.

$$Confidence = |I| + |Q| \tag{5}$$

In this manner, one pixel of the reflected light image information is calculated from the light amount values $C_0$, $C_{90}$, $C_{180}$, and $C_{270}$ in the four phases of the light receiving unit 12. The light amount values $C_0$, $C_{90}$, $C_{180}$, and $C_{270}$ of each phase are acquired from the corresponding light receiving element of the light receiving unit 12.

FIG. 4 is a diagram illustrating an example of the amount of light received by the light receiving unit 12. As described above, in the light receiving unit 12, in addition to the reflected light 32, that is, the direct reflected light, in which the projection light 30 from the light source unit 11 is reflected by the measurement object 31, the ambient light to which the projection light 30 from the light source unit 11 does not contribute is also received. Furthermore, the pixel signal output from the light receiving unit 12 includes a DC component such as dark current (dark noise).

Therefore, the amount of light received by the light receiving unit 12 is the sum of the amount of direct reflected light, the amount of ambient light, and the dark noise. Calculating the above-described Formulas (1) to (3) and (5) will cancel the component of the ambient light and the dark noise, thereby extracting the component of the directly reflected light.

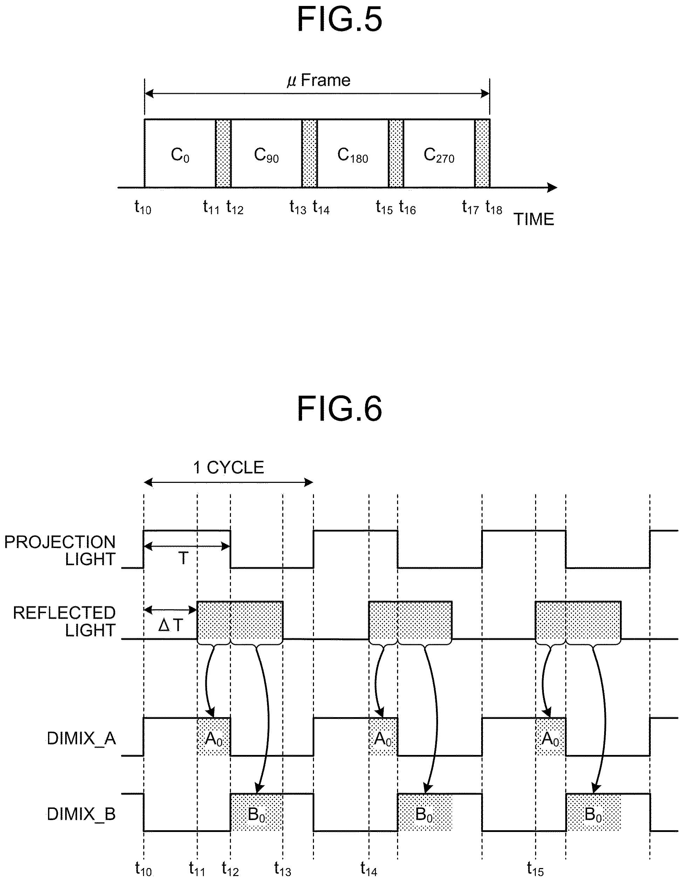

Next, a method of acquiring each of the light amount values $C_0$, $C_{90}$, $C_{180}$, and $C_{270}$ of each of phases and a method of calculating the pixel value Confidence of the distance information and the reflected light image information will be described more specifically with reference to FIGS. 5 to 9.

(First method)

FIG. 5 is a diagram illustrating a first method of acquiring each light amount value and calculating each piece of information applied to each embodiment. In FIG. 5, the light receiving unit 12 sequentially acquires light amount values $C_0$, $C_{90}$, $C_{180}$, and $C_{270}$ for each of phases. In the example of FIG. 5, the light receiving unit 12 performs exposure with the phase 0° in a period from time point $t_{10}$ to time point $t_{11}$, and performs exposure with the phase 90° in a period from time point $t_{12}$ to time point $t_{13}$, which comes after a predetermined time (for example, processing switching time) sandwiched between time point $t_{11}$ and time point $t_{12}$. Similarly, light reception with the phase 180° is performed in a period from time point $t_{14}$ to time point $t_{15}$, which comes after a predetermined time sandwiched between time point $t_{13}$ and time point $t_{14}$, and exposure is performed with the phase 270° in a period from time point $t_{16}$ to time point $t_{17}$ after a predetermined time sandwiched between time point $t_{15}$ and time point $t_{16}$.

At time point $t_{18}$ after a predetermined time sandwiched between time point $t_{17}$ and time point $t_{18}$, the operation from time point $t_{10}$ described above is executed again.

Here, a sequence of performing exposure with each phase is assumed to be one μFrame. In the example of FIG. 5, the period of time point $t_{10}$ to time point $t_{18}$ is a period of one μFrame. The period of one μFrame is shorter than one frame period (for example, 1/30 sec) in imaging, and a process of one μFrame can be executed a plurality of times within one frame period.

The distance measurement processing unit 13 stores, in memory, for example, the light amount values $C_0$, $C_{90}$, $C_{180}$, and $C_{270}$ sequentially acquired in each phase acquired within a period of one μFrame. The distance measurement processing unit 13 calculates the distance information Depth and the pixel value Confidence of the reflected light image information based on each of the light amount values $C_0$, $C_{90}$, $C_{180}$, and $C_{270}$ stored in the memory.

In this case, the differences I and Q, the phase difference (phase), and the distance information Depth are calculated by the above-described Formulas (1) to (4). Furthermore, here, the pixel value Confidence of the reflected light image information is calculated using the following Formula (6).

$$\text{Confidence} = (I^2 + Q^2)^{1/2} \tag{6}$$

(Second method)

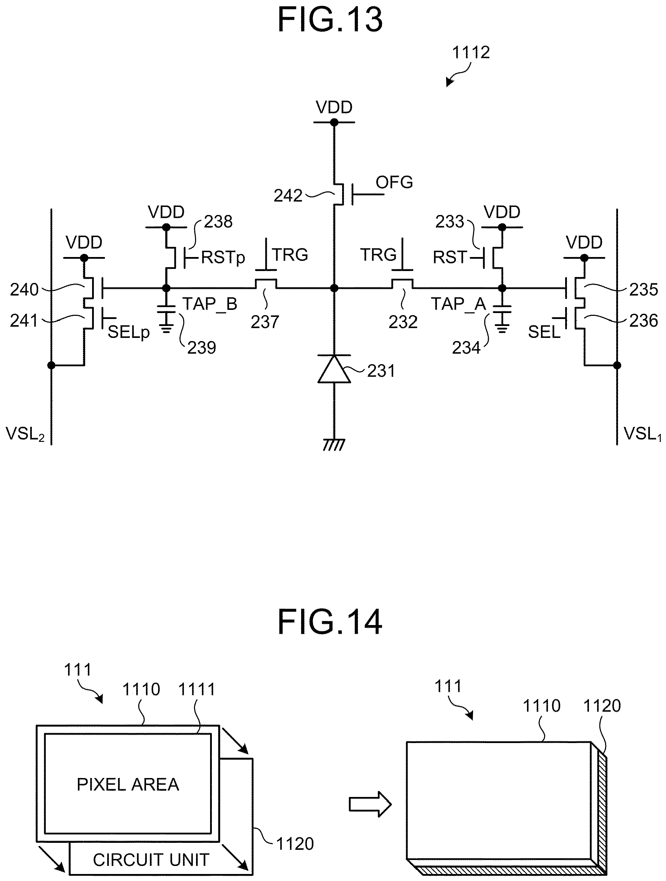

FIG. 6 is a diagram illustrating a second method of acquiring each light amount value and calculating each piece of information applied to each embodiment. In the second method, the light receiving unit 12 includes two readout circuits (taps A and B) for one light receiving element, and sequentially (alternately) executes readout by the tap A and the tap B (details will be described below with reference to FIG. 13). Hereinafter, the readout method using the tap A and the tap B is also referred to as a 2-tap method.

A method of calculating distance information using the 2-tap method will be described more specifically with reference to FIG. 6. FIG. 6 is a diagram illustrating a second method of acquiring each light amount value and calculating each piece of information applied to each embodiment. In FIG. 6, the projection light 30 from the light source unit 11 and the reflected light 32 reaching the light receiving unit 12 are illustrated from the upper side. As illustrated in the upper part of FIG. 6, the light source unit 11 projects the projection light 30 that blinks at a predetermined cycle. The light source unit 11 projects, for example, the projection light 30 that emits during a period T in one cycle.

FIG. 6 further illustrates an exposure control signal (DIMIX_A) in tap A and an exposure control signal (DIMIX_B) in tap B in the phase 0° of the light receiving unit 12. For example, a period during which the exposure control signals (DIMIX_A and DIMIX_B) are in high states is set as an exposure period during which the light receiving unit 12 outputs a valid pixel signal. DIMIX_A and DIMIX_B are exposure control signals having an exposure period based on the duty of the projection light 30. DIMIX_A and DIMIX_B are signals having a phase difference of 180° from each other.

In the example of FIG. 6, the projection light 30 is projected from the light source unit 11 at time point $t_{10}$. At time point $t_{11}$ after a delay $\Delta T$ corresponding to the distance D to the measurement object after the projection of the projection light 30, the reflected light 32 obtained by reflection of the projection light 30 at the measurement object reaches the light receiving unit 12.

On the other hand, in accordance with the exposure control signal (DIMIX_A) from the distance measurement processing unit 13, the light receiving unit 12 starts an exposure period in synchronization with time point $t_{10}$ of the projection timing of the projection light 30 in the light source unit 11. Similarly, in accordance with the exposure control signal (DIMIX_B) from the distance measurement processing unit 13, the light receiving unit 12 starts an exposure period in synchronization with time point $t_{12}$ having a phase difference 180° from DIMIX_A. With this operation, the light receiving unit 12 acquires the light amount values (pixel signals) $A_0$ and $B_0$ for each of the taps A and B in phase 0°.

In the example of FIG. 6, the arrival timings of the reflected light 32 are time points $t_{11}$, $t_{14}$, $t_{13}$,..., and the light amount value $A_0$ at the tap A at phase 0° is acquired as an integral value of the received light amount from time point

$t_{10}$ to an end time point $t_{12}$ of the exposure period including time point $t_0$ at DIMIX_A. On the other hand, in DIMIX_B at phase 0°, which has a phase difference 180° from DIMIX_A at phase 0°, a light amount value $B_0$ is acquired as an integral value of the received light amount from start time point $t_{12}$ of the exposure period in DIMIX_B to time point $t_{13}$ at a falling edge of the reflected light 32 included in the exposure period. The light amount values $A_0$ and $B_0$ are similarly acquired after a subsequent arrival timing $t_{14}$ of the reflected light 32.

FIG. 6 has described the light amount values $A_0$ and $B_0$ acquired by the light receiving unit 12 using the exposure control signal (DIMIX_A and DIMIX_B) at phase 0°. Note that the light receiving unit 12 acquires light amount values $A_{90}$, $B_{90}$, $A_{180}$, $B_{180}$, $A_{270}$, and $B_{270}$ by using exposure control signals (DIMIX_A and DIMIX_B) of phase 90°, phase 180°, and phase 270°, individually.

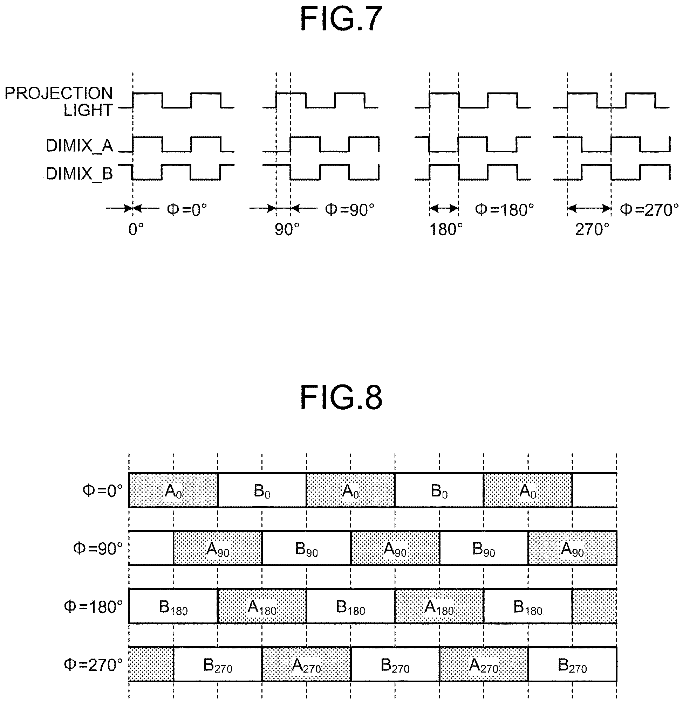

FIG. 7 is a diagram illustrating an example of an exposure control signal in each phase. FIG. 7 illustrates exposure control signals (DIMIX_A and DIMIX_B) at phase 0° (described as $\Phi = 0°$), phase 90° (described as $\Phi = 90°$), phase 180° (described as $\Phi = 180°$), and phase 270° (described as $\Phi = 270°$) of the light receiving unit 12.

For example, DIMIX_A of phase 90° is an exposure control signal at a phase shifted by 90° from the projection timing of the projection light 30, while DIMIX_B of phase 90° is an exposure control signal having a phase difference 180° from DIMIX_A of phase 90°. In addition, DIMIX_A of phase 180° is an exposure control signal having a phase shifted by 180° from the projection timing of the projection light 30, while DIMIX_B of phase 180° is an exposure control signal having a phase difference of 180° from DIMIX_A of phase 180°. DIMIX_A of phase 270° is an exposure control signal having a phase shifted by 270° from the projection timing of the projection light 30, while DIMIX_B of phase 270° is an exposure control signal having a phase difference of 180° from DIMIX_A of phase 270°. Here, the exposure period in each phase follows the duty of the projection light 30.

The phase difference of readout by the tap A and the tap B in the light receiving unit 12 will be described with reference to FIG. 8. FIG. 8 is a diagram illustrating an example of exposure periods of a tap A and a tap B at phases of 0°, 90°, 180°, and 270° for each light receiving unit 12 (for each light receiving element). In FIG. 8, for the sake of explanation, the exposure periods of the respective phases are arranged in parallel with the phases aligned.

In FIG. 8, exposure by the tap A and the tap B at phase 0° (illustrated as light amount values $A_0$ and $B_0$, respectively) is sequentially (alternately) executed. On the other hand, the exposure by the tap A and the tap B at phase 180° is delayed by 180° with respect to the exposure by the tap A and the tap B with the phase 0°, and the exposure by the tap A and the tap B is sequentially executed. At this time, the phases of the exposure period of the tap A at the phase 0° and the exposure period of the tap B at the phase 180° match each other. Similarly, the phases of the exposure period by the tap B at the phase of 0° and the exposure period by the tap A at the phase of 180° match each other.

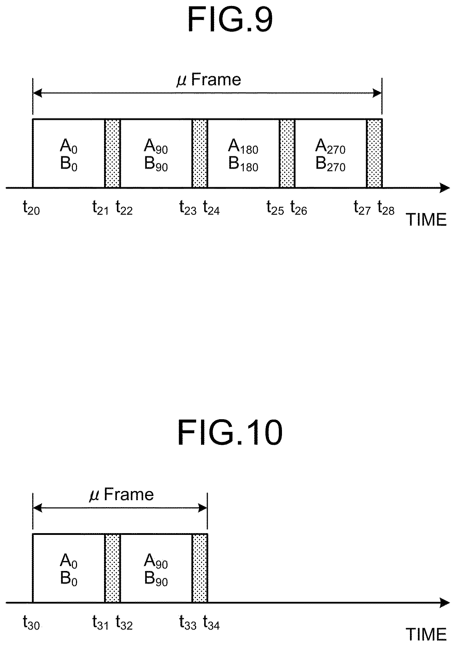

FIG. 9 is a diagram illustrating light reception timing by the light receiving unit 12. As illustrated in FIG. 9, the light receiving unit 12 sequentially executes readout of the tap A and the tap B in each phase. Furthermore, the light receiving unit 12 sequentially executes readout of each of phases within a period of one $\mu$Frame.

That is, in the example of FIG. 9, the light receiving unit 12 performs exposure at phase 0° in the period of time points $t_{20}$ to $t_{21}$. The distance measurement processing unit 13 obtains the light amount value $A_0$ and the light amount value $B_0$ based on the pixel signals read by the tap A and the tap B, respectively. The light receiving unit 12 performs exposure with phase 90° in a period of time point $t_{22}$ to time point $t_{23}$ after a predetermined time sandwiched between time point $t_{21}$ and time point $t_{22}$. The distance measurement processing unit 13 obtains the light amount value $A_{90}$ and the light amount value $B_{90}$ based on the pixel signals read by the tap A and the tap B, respectively.

Similarly, exposure at phase 180° is performed in a period from time point $t_{24}$ to time point $t_{25}$ after a predetermined time sandwiched between time point $t_{23}$ and time point $t_{24}$. The distance measurement processing unit 13 obtains the light amount value $A_{180}$ and the light amount value $B_{180}$ based on the pixel signals read by the tap A and the tap B, respectively. Furthermore, the light receiving unit 12 performs exposure at phase 270° in a period of time point $t_{26}$ to time point $t_{27}$ after a predetermined time sandwiched between time point $t_{25}$ and time point $t_{26}$. The distance measurement processing unit 13 obtains the light amount value $A_{270}$ and the light amount value $B_{270}$ based on the pixel signals read by the tap A and the tap B, respectively.

At a time point $t_{28}$ after a predetermined time sandwiched between time point $t_{27}$ and time point $t_{28}$, the operation from time point $t_{20}$ described above is executed again.

The method of sequentially executing the readout by the taps A and B for the phases 0°, 90°, 180°, and 270° and obtaining the light amount values based on the readout by the taps A and B for individual phases illustrated in FIG. 9 is referred to as a 2-tap method (4 phase).

In the case of this second method, the differences I and Q are respectively calculated by the following Formulas (7) and (8) using the individual light amount values $A_0$ and $B_0$, $A_{90}$ and $B_{90}$, $A_{180}$ and $B_{180}$, and $A_{270}$ and $B_{270}$.

$$I = C_0 - C_{180} = (A_0 - B_0) - (A_{180} - B_{180}) \qquad (7)$$

$$Q = C_{90} - C_{270} = (A_{90} - B_{90}) - (A_{270} - B_{270}) \qquad (8)$$

The phase difference (phase), the distance information Depth, and the pixel value Confidence of the reflected light image information are calculated by the above-described Formulas (3), (4), and (6) using the differences I and Q respectively calculated by the Formulas (7) and (8).

In the 2-tap method (4 phase) illustrated in FIGS. 6 to 8, the exposure period in each of phases achieves redundancy by using the tap A and the tap B. This makes it possible to improve the calculated distance information Depth and the S/N ratio of the reflected light image information.

(Third method)

FIG. 10 is a diagram illustrating a third method of acquiring each light amount value and calculating each piece of information applied to each embodiment. The third method is the same as the second method in that the light receiving unit 12 includes the tap A and the tap B similarly to the above-described second method and sequentially executes readout from the tap A and the tap B. On the other hand, the third method is different from the second method in that the light receiving unit 12 sequentially executes the above-described readout of phases 0° and 90° and does not execute the readout of phases 180° or 270°.

As illustrated in FIG. 10, the light receiving unit 12 includes the tap A and the tap B similarly to the above-described second method, and sequentially executes readout from the tap A and the tap B. Furthermore, the light receiving unit 12 sequentially executes readout of phases 0° and 90° among the phases 0°, 90°, 180°, and 270° described above. In the third method, the readout periods of the phases 0° and 90° are set as a period of 1 $\mu$Frame.

In the case of FIG. 10, the readout sequence is the same sequence as the time point $t_{20}$ to $t_{24}$ of FIG. 9 described above. That is, the light receiving unit 12 performs exposure with the phase 0° in the period time point $t_{30}$ to $t_{31}$. The distance measurement processing unit 13 obtains the light amount value $A_0$ and the light amount value $B_0$ based on the pixel signals read by the tap A and the tap B, respectively. The light receiving unit 12 performs exposure with phase 90° in a period of time point $t_{32}$ to time point $t_{33}$ after a predetermined time sandwiched between time point $t_{31}$ and time point $t_{32}$. The distance measurement processing unit 13 obtains the light amount value $A_{90}$ and the light amount value $B_{90}$ based on the pixel signals read by the tap A and the tap B, respectively.

At a time point $t_{34}$ after a predetermined time sandwiched between time point $t_{33}$ and time point $t_{34}$, the operation from time point $t_{30}$ described above is executed again.

The method of sequentially executing the readout by the taps A and B for the phases 0° and 90 and obtaining the light amount values based on the readout of the taps A and B for the phases 0° and 90° illustrated in FIG. 10 is referred to as a 2-tap method (2 phase).

As described above, the exposure control signals DIMIX_A and DIMIX_B in the tap A and the tap B of each phase are signals having inverted phases. Therefore, DIMIX_A of phase 0° and DIMIX_B of phase 180° are signals having the same phase. Similarly, DIMIX_B of phase 0° and DIMIX_A of phase 180° are signals having the same phase. In addition, DIMIX_A of phase 90° and DIMIX_B of phase 270° are signals having the same phase, and DIMIX_B of phase 90° and DIMIX_A of phase 270° are signals having the same phase.

Therefore, the light amount value $B_0$ becomes the same as the readout value of the light receiving unit 12 at the phase 180°, while the light amount value $B_{90}$ becomes the same as the readout value of the light receiving unit 12 at the phase 270°. In other words, for example, this is equivalent to execution of readout, at phase 0°, of a phase 0° and phase 180° having a phase difference 180° from phase 0°. Similarly, this is equivalent to execution of readout, at phase 90°, of a phase 90° and phase 270° having a phase difference 180° from phase 90°.

That is, for example, it can be said that the exposure period of the tap B at phase 0° is the exposure period at phase 180°. It can also be said that the exposure period of tap B at phase 90° is the exposure period at phase 270°. Accordingly, in the case of the third method, the differences I and Q are respectively calculated by the following Formulas (9) and (10) using the light amount values $A_0$ and $B_0$, and $A_{90}$ and $B_{90}$.

$$I = C_0 - C_{180} = (A_0 - B_0) \qquad (9)$$

$$Q = C_{90} - C_{270} = (A_{90} - B_{90}) \qquad (10)$$

The phase difference (phase), the distance information Depth, and the pixel value Confidence of the reflected light image information can be calculated by the above-described Formulas (3), (4), and (6) using the differences I and Q respectively calculated by the Formulas (9) and (10).

In this manner, two readout circuits (the tap A and the tap B) are provided for one light receiving element, and readout using the tap A and the tap B is sequentially executed. With this configuration, an exposure periods including phases difference 180° can be implemented in one phase (for example, phase 0°). Therefore, in the 2-tap method (2 phase) illustrated in FIG. 10, the same result as the 1-tap method illustrated in FIG. 5 can be obtained by fewer light receiving elements than the 1-tap method. This makes it possible to improve the resolution of the distance information and the light reception image information.

Here, an example of a method of calculating the pixel value IR of IR image information will be described. As described above, the IR image information is image information including the component of the reflected light 32 and the component of the ambient light. On the other hand, the light received by the light receiving unit 12 includes a DC component such as dark current (dark noise) in addition to the component of the reflected light 32 and the component of the ambient light. Therefore, the IR image information is calculated by subtracting the DC component from the pixel signal output from the light receiving unit 12. Specifically, the pixel value IR of the IR image information is calculated using the following Formula (11).

$$\mathrm{RAW} = \mathrm{C}_0 - \mathrm{C}_{\mathrm{FPN}} = (\mathrm{A}_0 - \mathrm{A}_{\mathrm{FPN}}) + (\mathrm{B}_0 - \mathrm{B}_{\mathrm{FPN}}) \qquad (11)$$

Here, $C_{\mathrm{FPN}}$, $A_{\mathrm{FPN}}$, and $B_{\mathrm{FPN}}$ are DC components such as dark current (dark noise), and are fixed pattern noise. It is assumed that $C_{\mathrm{FPN}}$, $A_{\mathrm{FPN}}$, and $B_{\mathrm{FPN}}$ are obtained in advance by experiments, simulations, or the like.

Alternatively, $C_{\mathrm{FPN}}$, $A_{\mathrm{FPN}}$, and $B_{\mathrm{FPN}}$ may be, for example, pixel signals output from the light receiving unit 12 when the light receiving unit 12 does not receive light. In this case, for example, it is assumed that such a pixel signal is acquired by the distance measuring device 10 acquiring a signal output from the light receiving unit 12 before the light source unit 11 projects the projection light 30.

Although Formula (11) is a case of calculating the pixel value IR of the IR image information at phase 0°, the pixel value IR of the IR image information may be calculated in a similar manner for other phases (phase 90°, 180° and 270°). In this case, for example, an average value of the pixel values IR calculated for each phase may be used as the pixel value IR of the IR image information calculated from the reflected light 32.

<1.3. Configuration applied to each embodiment>

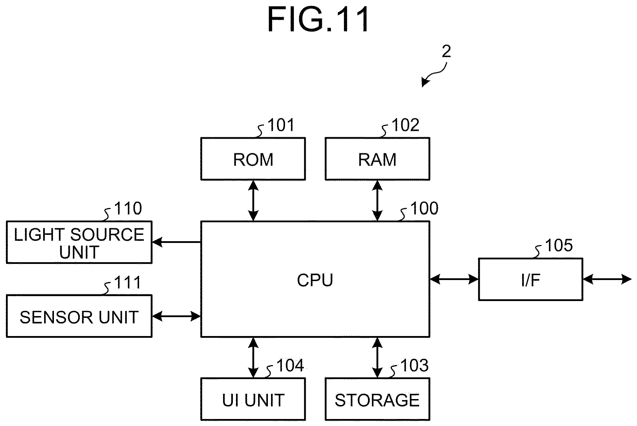

Next, an example of a configuration applied to each embodiment will be described. FIG. 11 is a block diagram illustrating a configuration of an example of an electronic device applied to each embodiment. In FIG. 11, the electronic device 1 includes a central processing unit (CPU) 100, read only memory (ROM) 101, random access memory (RAM) 102, storage 103, a user interface (UI) unit 104, and an interface (I/F) 105. Furthermore, the electronic device 1 includes a light source unit 110 and a sensor unit 111 respectively corresponding to the light source unit 11 and the light receiving unit 12 in FIG. 1.

The electronic device 1 illustrated in FIG. 11 can be actualized by applying a smartphone (multifunctional mobile phone terminal) or a tablet personal computer, for example. Devices to which the electronic device 1 is applied are not limited to these smartphones or tablet personal computers.

The storage 103 is a nonvolatile storage medium such as flash memory or a hard disk drive. The storage 103 can store various data and a program needed for the CPU 100 to operate. In addition, the storage 103 can store an application program (hereinafter, abbreviated as an application) for actualizing the application unit 20 described with reference to FIG. 1. The ROM 101 preliminarily stores programs and data needed for the CPU 100 to operate. The RAM 102 is a volatile storage medium that stores data.

The CPU 100 operates using the RAM 102 as work memory in accordance with the program stored in the storage 103 or the ROM 101 so as to control the entire operation of the electronic device 1.

The UI unit 104 includes various operators needed for operating the electronic device 1, a display element for displaying the state of the electronic device 1, and the like. The UI unit 104 may further include a display that displays an image captured by the sensor unit 111 described below. In addition, this display may be a touch panel integrating a display device and an input device, and various operators may be formed by components displayed on the touch panel.

The light source unit 110 includes a light emitting element such as an LED or a VCSEL, and a driver needed for driving the light emitting element. In the light source unit 110, the driver generates a drive signal having a predetermined duty in response to an instruction from the CPU 100. The light emitting element emits light in accordance with the drive signal generated by the driver, and projects light modulated by PWM as projection light 30.

The sensor unit 111 includes: a pixel array unit having a plurality of light receiving elements arranged in an array; and a drive circuit that drives the plurality of light receiving elements arranged in the pixel array unit and outputs a pixel signal read from each light receiving element. The pixel signal output from the sensor unit 111 is supplied to the CPU 100.

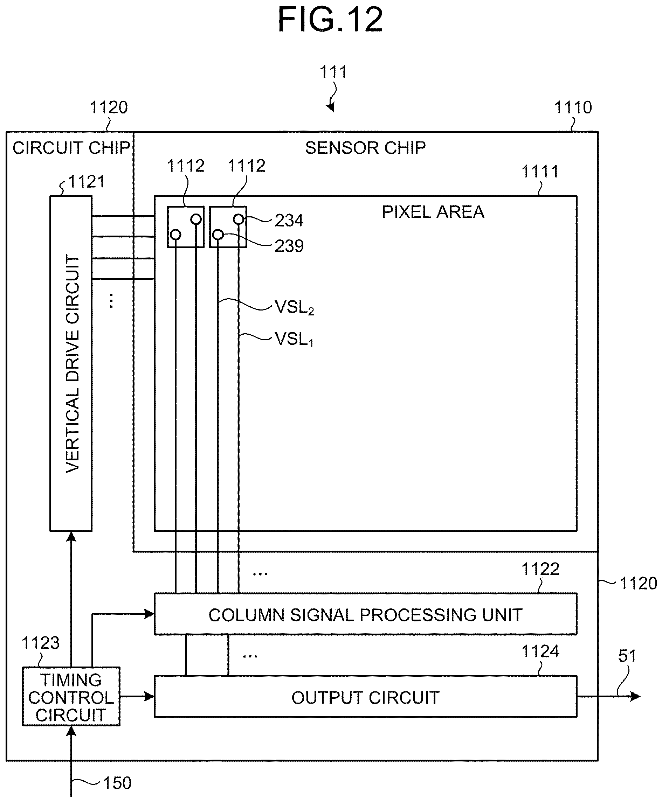

Next, the sensor unit 111 applied to each embodiment will be described with reference to FIGS. 12 to 15.

FIG. 12 is a block diagram illustrating an example of a configuration of the sensor unit 111 applied to each embodiment. In FIG. 12, the sensor unit 111 has a stacked structure including a sensor chip 1110 and a circuit chip 1120 stacked on the sensor chip 1110. In this stacked structure, the sensor chip 1110 and the circuit chip 1120 are electrically connected to each other through a connection portion (not illustrated) such as a via or a Cu-Cu connection. The example of FIG. 8 illustrates a state in which the wiring of the sensor chip 1110 and the wiring of the circuit chip 1120 are connected to each other through the connection portion.

A pixel area 1111 includes a plurality of pixels 1112 arranged in an array on the sensor chip 1110. For example, an image signal of one frame is formed based on pixel signals output from the plurality of pixels 1112 included in the pixel area 1111. Each of the pixels 1112 arranged in the pixel area 1111 can receive infrared light, performs photoelectric conversion based on the received infrared light, and outputs an analog pixel signal, for example. Each of the pixels 1112 included in the pixel area 1111 is connected to two vertical signal lines, namely, vertical signal lines $VSL_1$ and $VSL_2$.

The sensor unit 111 further includes a vertical drive circuit 1121, a column signal processing unit 1122, a timing control circuit 1123, and an output circuit 1124 arranged on the circuit chip 1120.

The timing control circuit 1123 controls the drive timing of the vertical drive circuit 1121 in accordance with an element control signal supplied from the outside via a control line 150. Furthermore, the timing control circuit 1123 generates a vertical synchronization signal based on the element control signal. The column signal processing unit 1122 and the output circuit 1124 execute individual processes in synchronization with the vertical synchronization signal generated by the timing control circuit 1123.

The vertical signal lines $VSL_1$ and $VSL_2$ are wired in the vertical direction in FIG. 12 for each column of the pixels 1112. Assuming that the total number of columns in the pixel area 1111 is M (M is an integer of 1 or more), a total of $2 \times M$ vertical signal lines are wired in the pixel area 1111. Although details will be described below, each of the pixels 1112 includes two taps, namely, tap A (TAP_A) and tap B (TAP_B) that each store charges generated by photoelectric conversion. The vertical signal line $VSL_1$ is connected to the tap A of the pixel 1112, while the vertical signal line $VSL_2$ is connected to the tap B of the pixel 1112.

The vertical signal line $VSL_1$ is used to output a pixel signal $AIN_{P1}$ that is an analog pixel signal based on the electric charge of the tap A of the pixel 1112 in the corresponding pixel column. The vertical signal line $VSL_2$ is used to output a pixel signal $AIN_{P2}$ that is an analog pixel signal based on the charge of the tap B of the pixel 1112 in the corresponding pixel column.

Under the timing control of the timing control circuit 1123, the vertical drive circuit 1121 drives each of the pixels 1112 included in the pixel area 1111 in units of pixel rows and outputs the pixel signals $AIN_{P1}$ and $AIN_{P2}$. The pixel signals $AIN_{P1}$ and $AIN_{P2}$ output from the respective pixels 1112 are supplied to the column signal processing unit 1122 via the vertical signal lines $VSL_1$ and $VSL_2$ of the respective columns.

The column signal processing unit 1122 includes a plurality of AD converters provided for each pixel column corresponding to the pixel column of the pixel area 1111, for example. Each AD converter included in the column signal processing unit 1122 performs AD conversion on the pixel signals $AIN_{P1}$ and $AIN_{P2}$ supplied via the vertical signal lines $VSL_1$ and $VSL_2$, and supplies the pixel signals $AIN_{P1}$ and $AIN_{P2}$ converted into digital signals to the output circuit 1124.

The output circuit 1124 performs signal processing such as correlated double sampling (CDS) processing on the pixel signals $AIN_{P1}$ and $AIN_{P2}$ converted into digital signals and output from the column signal processing unit 1122, and outputs the pixel signals $AIN_{P1}$ and $AIN_{P2}$ subjected to the signal processing to the outside of the sensor unit 111 via an output line 51 as a pixel signal read from the tap A and a pixel signal read from the tap B, respectively.

FIG. 13 is a circuit diagram illustrating a configuration of an example of the pixel 1112 applied to each embodiment. The pixel 1112 includes a photodiode 231, two transfer transistors 232 and 237, two reset transistors 233 and 238, two floating diffusion layers 234 and 239, two amplification transistors 235 and 240, and two selection transistors 236 and 241. The floating diffusion layers 234 and 239 correspond to the tap A (denoted as TAP_A) and the tap B (denoted as TAP_B) described above, respectively.

The photodiode 231 is a light receiving element that photoelectrically converts received light to generate a charge. When a surface on which the circuit is disposed in the semiconductor substrate is defined as a front surface, the photodiode 231 is disposed on a back surface of the substrate. The solid-state imaging element like this is referred to as a back-illuminated solid-state imaging element. Instead of the back-illuminated type, it is also possible to use a front-illuminated configuration in which the photodiode 231 is arranged on the front surface.

An overflow transistor 242 is connected between a cathode electrode of the photodiode 231 and a power supply line VDD, and has a function of resetting the photodiode 231. That is, the overflow transistor 242 is turned on in response to the overflow gate signal OFG supplied from the vertical drive circuit 1121, thereby sequentially discharging the charge of the photodiode 231 to the power supply line VDD.

The transfer transistor 232 is connected between the cathode of the photodiode 231 and the floating diffusion layer 234. Furthermore, the transfer transistor 237 is connected between the cathode of the photodiode 231 and the floating diffusion layer 239. The transfer transistors 232 and 237 sequentially transfer the charges generated by the photodiode 231 to the floating diffusion layers 234 and 239, respectively, in accordance with a transfer signal TRG supplied from the vertical drive circuit 1121.

The floating diffusion layers 234 and 239 corresponding to the taps A and B accumulate the charges transferred from the photodiode 231, convert the charges into voltage signals of voltage values corresponding to the accumulated charge amounts, and respectively generate pixel signals $AIN_{P1}$ and $AIN_{P2}$ which are analog pixel signals.

In addition, the two reset transistors 233 and 238 are connected between the power supply line VDD and each of the floating diffusion layers 234 and 239. The reset transistors 233 and 238 are turned on in accordance with reset signals RST and $RST_p$ supplied from the vertical drive circuit 1121, thereby extracting charges from the floating diffusion layers 234 and 239, respectively, and initializing the floating diffusion layers 234 and 239.

The two amplification transistors 235 and 240 are connected between the power supply line VDD and each of the selection transistors 236 and 241. The amplification transistors 235 and 240 each amplify a voltage signal obtained by converting a charge into a voltage in each of the floating diffusion layers 234 and 239.

The selection transistor 236 is connected between the amplification transistor 235 and the vertical signal line $VSL_1$. In addition, the selection transistor 241 is connected between the amplification transistor 240 and the vertical signal line $VSL_2$. The selection transistors 236 and 241 are turned on in accordance with the selection signals SEL and $SEL_p$ supplied from the vertical drive circuit 1121, thereby outputting the pixel signals $AIN_{P1}$ and $AIN_{P2}$ amplified by the amplification transistors 235 and 240 to the vertical signal line $VSL_1$ and the vertical signal line $VSL_2$, respectively.

The vertical signal line $VSL_1$ and the vertical signal line $VSL_2$, connected to the pixel 1112 are connected to an input end of one AD converter included in the column signal processing unit 1122 for each pixel column. The vertical signal line $VSL_1$ and the vertical signal line $VSL_2$, supply the pixel signals $AIN_{P1}$ and $AIN_{P2}$ output from the pixels 1112 to the AD converters included in the column signal processing unit 1122 for each pixel column.

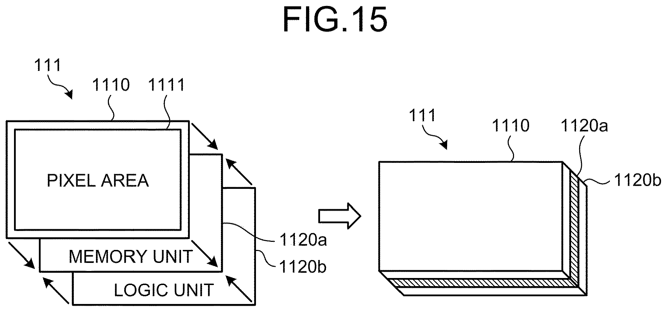

The stacked structure of the sensor unit 111 will be schematically described with reference to FIGS. 14 and 15.

As an example, the sensor unit 111 is formed with a two-layer structure in which semiconductor chips are stacked in two layers. FIG. 14 is a diagram illustrating an example in which the sensor unit 111 applied to each embodiment is formed by a stacked Complementary Metal Oxide Semiconductor Image Sensor (CIS) having a two-layer structure. In the structure of FIG. 14, the pixel area 1111 is formed in the semiconductor chip of the first layer which is the sensor chip 1110, while a circuit unit is formed in the semiconductor chip being the second layer which is the circuit chip 1120.

The circuit unit includes, for example, the vertical drive circuit 1121, the column signal processing unit 1122, the timing control circuit 1123, and the output circuit 1124. Note that the sensor chip 1110 may include the pixel area 1111 and the vertical drive circuit 1121, for example. As illustrated on the right side of FIG. 14, the sensor chip 1110 and the circuit chip 1120 are bonded together with electrical contact with each other, so as to form the sensor unit 111 as one solid-state imaging element.

As another example, the sensor unit 111 is formed by a three-layer structure in which semiconductor chips are stacked in three layers. FIG. 15 is a diagram illustrating an example in which the sensor unit 111 applied to each embodiment is formed of a stacked CIS having a three-layer structure. In the structure of FIG. 15, the pixel area 1111 is formed in a semiconductor chip being a first layer, which is the sensor chip 1110. In addition, the above-described circuit chip 1120 is divided into a first circuit chip 1120a formed of a semiconductor chip being a second layer and a second circuit chip 1120b formed of a semiconductor chip being a third layer. As illustrated on the right side of FIG. 15, the sensor chip 1110, the first circuit chip 1120a, and the second circuit chip 1120b are bonded together with electrical contact with each other, so as to form the sensor unit 111 as one solid-state imaging element.

<2. First embodiment>

<2.1. Outline of correction process>

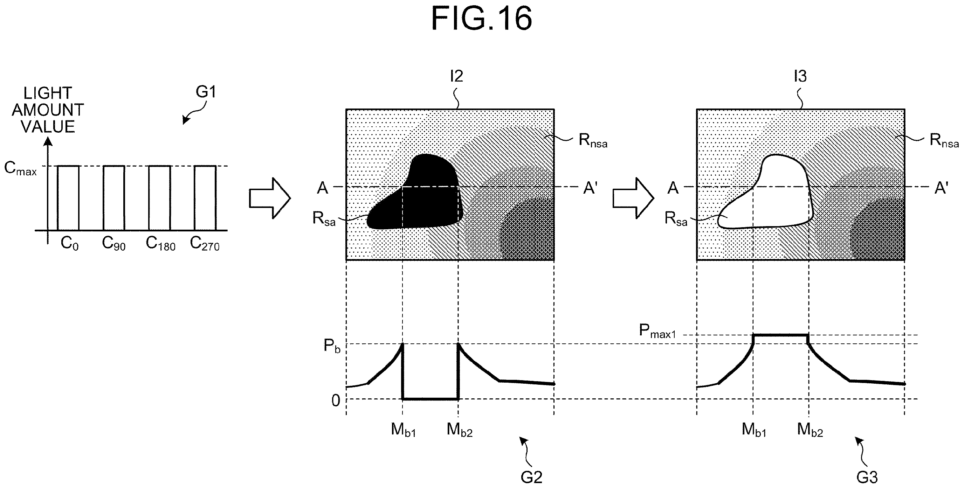

Next, a first embodiment of the present disclosure will be described. The distance measuring device according to the present embodiment generates reflected light image information in addition to the distance D to the measurement object based on the reflected light 32 received by the light receiving unit 12. At this time, for example, when the reflected light 32 received by the light receiving unit 12 has high intensity and the light intensity is saturated, reflected light image information might be generated with degraded accuracy. Hereinafter, with reference to FIG. 16, the reflected light image information in a case where the light intensity is saturated will be described, together with a method of correcting the reflected light image information. FIG. 16 is a diagram illustrating an example of a correction method according to the first embodiment of the present disclosure.

As described above, reflected light 32 includes ambient light and dark noise in addition to direct reflected light reflected by the measurement object 31. For example, in a case where, in particular, the ambient light has high light intensity, the reflected light 32 received by the light receiving unit 12 might have high intensity, leading to a possibility of saturation of the light amount values $C_0$, $C_{90}$, $C_{180}$, and $C_{270}$. Alternatively, even when the projection light has high intensity, the measurement object 31 has high reflectance, or when the distance D to the measurement object 31 is short, the intensity of the reflected light 32 received by the light receiving unit 12 might increase, leading to the possibility of saturation of the light amount values $C_0$, $C_{90}$, $C_{180}$, and $C_{270}$. Here, as illustrated in graph G1 of FIG. 16, it is assumed that the reflected light 32 received by the light receiving unit 12 has high intensity, and the light amount values $C_0$, $C_{90}$, $C_{180}$, and $C_{270}$ are saturated at a light amount value $C_{max}$.

Here, the pixel value Confidence of the reflected light image information is calculated by the above-described Formulas (5) to (8). When the light amount values $C_0$, $C_{90}$, $C_{180}$, and $C_{270}$ are saturated at the light amount value $C_{max}$, the I and Q components become zero, and the pixel value Confidence of the reflected light image information also becomes zero. In this manner, when the reflected light 32 received by the light receiving unit 12 has high intensity and the light receiving element is saturated, for example, as illustrated in an image I2 of FIG. 16, there occurs a region $R_{sa}$ (hereinafter, also referred to as a saturation region $R_{sa}$) in which the pixel value Confidence of the corresponding reflected light image information becomes zero. As illustrated in graph G2 in FIG. 16, the saturation region $R_{sa}$ has a value of zero for the pixel value Confidence of the reflected light image information, causing discontinuity between the saturation region $R_{sa}$ and a region $R_{nsa}$ (hereinafter, also referred to as an non-saturation region $R_{nsa}$) where the light receiving element is not saturated. Note that graph G2 is a graph indicating the pixel value Confidence of the reflected light image information at a line segment A-A' of the image I2.

In this manner, occurrence of discontinuity in the reflected light image information might lead to a problem in processes in the application unit 20. For example, when the application unit 20 recognizes the saturation region $R_{sa}$ of the reflected light image information as a feature, an error might occur in the recognition result of the reflected light image information. For example, in a case where the application unit 20 performs face recognition using reflected light image information, recognition of the saturation region $R_{sa}$ as a facial feature (for example, a mole) can lead to a possibility of a failure in correct execution of face recognition.

In view of this, the first embodiment of the present disclosure corrects the pixel value Confidence in the saturation region $R_{sa}$ of the reflected light image information, thereby canceling the discontinuity of the reflected light image information. This makes it possible to suppress a degradation in the generation accuracy of the reflected light image information, leading to suppression of the occurrence of a problem in the application unit 20.

Specifically, the correction method according to the first embodiment of the present disclosure corrects the pixel value Confidence in the saturation region $R_{sa}$ of the reflected light image information from zero to a predetermined value. In the example illustrated in FIG. 16, as illustrated in graph G3, the pixel value Confidence in the saturation region $R_{sa}$ is corrected to Confidence = $P_{max1}$. As illustrated in graph G3, the correction value $P_{max1}$ of the pixel value Confidence is a value ($P_{max1} > P_b$) larger than pixel values $P_b$ of pixels $M_{b1}$ and $M_{b2}$ in the non-saturation region $R_{nsa}$ in contact with the saturation region $R_{sa}$.

With this configuration, as illustrated in an image I3 of FIG. 16, discontinuity of reflected light image information can be canceled. In the image I3, the boundary between the saturation region $R_{sa}$ and the non-saturation region $R_{nsa}$ is indicated by a black line to facilitate understanding.

<2.2. Configuration example of distance measuring device>

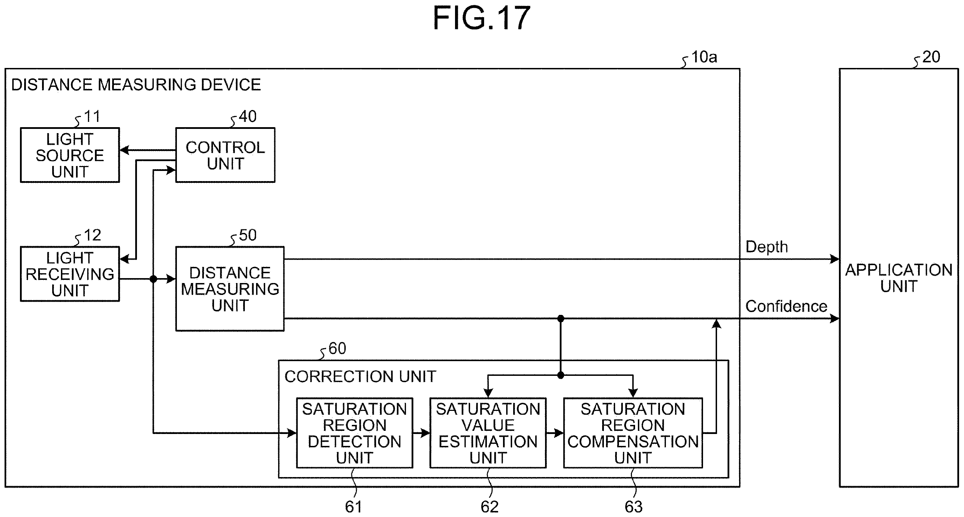

FIG. 17 is a functional block diagram of an example illustrating functions of the distance measuring device according to the first embodiment of the present disclosure. In FIG. 17, a distance measuring device 10a includes a light source unit 11, a light receiving unit 12, a control unit 40, a distance measuring unit 50, and a correction unit 60. Among the light source unit 11, the light receiving unit 12, the control unit 40, the distance measuring unit 50, and the correction unit 60, the control unit 40, the distance measuring unit 50, and the correction unit 60 are implemented by operation of a predetermined program on the CPU 100 (refer to FIG. 11). Not limited to this, all or part of the control unit 40, the distance measuring unit 50, and the correction unit 60 may be implemented by hardware circuits that operate in cooperation with each other. Hereinafter, a device including the control unit 40, the distance measuring unit 50, and the correction unit 60 is also simply referred to as an information processing apparatus.

In the following, for the sake of explanation, it is assumed that a 2-tap method (4 phase) is applied to the acquisition of each light amount value and the calculation of each piece of information at each phase of 0°, 90°, 180°, and 270° in the light receiving unit 12. Note that acquisition of each light amount value and calculation of each piece of information may be performed using a method other than the 2-tap method (4 phase).

The control unit 40 generates a light source control signal and supplies the generated signal to the light source unit 11. The light source control signal includes, for example, information that designates a duty in PWM modulation, intensity of light emitted by the light source unit 11, light emission timing, and the like. The light source unit 11 projects the projection light 30 (refer to FIG. 1) modulated by PWM in accordance with a light source control signal supplied from the control unit 40.

Furthermore, the control unit 40 generates an exposure control signal and supplies the generated signal to the light receiving unit 12. The exposure control signal includes information to control the light receiving unit 12 to perform exposure with an exposure length based on the duty of the light source unit 11 in each of different phases. Furthermore, the exposure control signal further includes information for controlling the exposure amount in the light receiving unit 12.

The pixel signal of each of phases output from the light receiving unit 12 is supplied to the distance measuring unit 50. The distance measuring unit 50 calculates the distance information Depth and the pixel value Confidence of the reflected light image information based on the pixel signal of each of phases supplied from the light receiving unit 12. The distance measuring unit 50 passes the calculated distance information Depth and the pixel value Confidence of the reflected light image information to the application unit 20, for example.

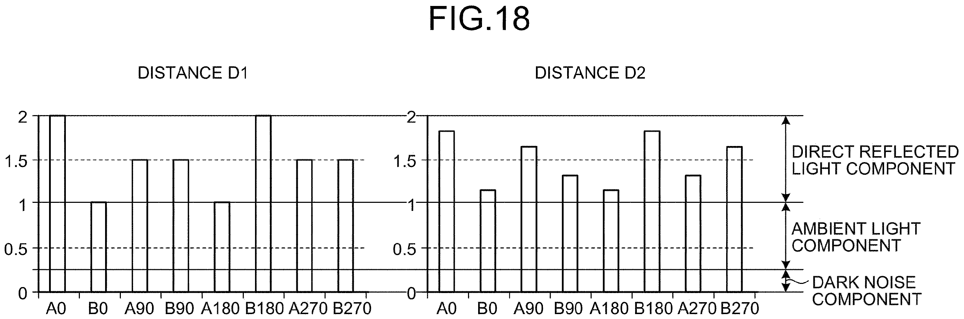

Here, the pixel value Confidence of the reflected light image information will be described with reference to FIG. 18. FIG. 18 is a diagram illustrating a method of calculating the pixel value Confidence of the reflected light image information in the 2-tap method (4 phase). FIG. 18 illustrates a pixel signal used for calculating a distance D1 to a measurement object 31A and a pixel signal used for calculating a distance D2 to a measurement object 31B for each tap of each of phases. The measurement object 31A and the measurement object 31B may be different measurement objects arranged in a same space. Alternatively, the two objects may be the same measurement object measured in different frames, or may be different locations of the same measurement object.

As illustrated in FIG. 18, the pixel signal includes a direct reflected light component, an ambient light component, and a dark noise component. The pixel value Confidence of the reflected light image information is calculated from the component of the direct reflected light. Specifically, as described above, the pixel value Confidence of the reflected light image information is calculated using the following Formulas (5), (7), and (8).

$$I = (A_0 - B_0) - (A_{180} - B_{180}) \quad \ldots \quad (7)$$

$$Q = (A_{90} - B_{90}) - (A_{270} - B_{270}) \quad \ldots \quad (8)$$

$$Confidence = |I| + |Q| \quad \ldots \quad (5)$$

As illustrated in FIG. 18, the pixel signal used to calculate the distance D2 is not saturated. In contrast, the pixel signal used to calculate the distance D1 is saturated in the tap A with phase 0° and the tap B with phase 180°. Therefore, the pixel value Confidence of the reflected light image information corresponding to the distance D2 can be calculated with high accuracy, but the pixel value Confidence of the reflected light image information corresponding to the distance D1 cannot be calculated with high accuracy. To handle this, in the present embodiment, when saturation is occurring in the light receiving element of the light receiving unit 12, the correction unit 60 corrects the pixel value Confidence of the reflected light image information, and the control unit 40 adjusts the control signal in the next frame.

Returning to FIG. 17, the control unit 40 generates a control signal for controlling the exposure amount in the light receiving unit 12 based on each pixel signal of each of phases (for example, phases 0°, 90°, 180° and 270°) supplied from the light receiving unit 12. The control signal generated by the control unit 40 is used by the distance measuring unit 50 to appropriately calculate the distance information Depth regardless of the scene to be imaged. For example, the control unit 40 generates a control signal so as to adjust each light amount value based on the pixel signal of each of phases to a value within an appropriate range.

That is, more specifically, referring to the above-described Formulas (1) and (2), there is a possibility that the differences I and Q cannot be appropriately calculated in a case where one or more pixel signals among the pixel signals corresponding to the respective phases are saturated or at a predetermined level or less. In this case, the distance information Depth calculated based on the differences I and Q in the distance measuring unit 50 has low reliability.

To handle this, the control unit 40 obtains a control signal to control each light amount value based on each pixel signal of each of phases to a value within an appropriate range. Based on the obtained control signal, the control unit 40 controls the gain and the exposure time in the light receiving unit 12 and the duty and intensity of light emission in the light source unit 11 so as to adjust the amount of light received by the light receiving unit 12 to be appropriate.

As an example, in a case where the reflectance of the measurement object 31 is low, or in a case where the distance indicated by the distance information Depth calculated by the distance measuring unit 50 is a predetermined value or more, the S/N of the calculated distance information Depth becomes low, and the accuracy of the distance information Depth decreases. In this case, in order to maintain the S/N of the distance information Depth calculated by the distance measuring unit 50, the control unit 40 generates a control signal to control the light receiving unit 12 so as to prolong the exposure time by the light receiving unit 12.

The control unit 40 stores the generated control signal in a register (not illustrated) or the like. The control unit 40 executes light emission in the light source unit 11 and light reception by the light receiving unit 12 for each frame of a predetermined cycle. The control unit 40 performs processing for one frame based on the control information stored in the register, obtains a control signal based on a result of the processing, and updates the control signal stored in the register.

The correction unit 60 corrects the pixel value Confidence of the reflected light image information by using each pixel signal of each of phases. The correction unit 60 includes a saturation region detection unit 61, a saturation value estimation unit 62, and a saturation region compensation unit 63.

The saturation region detection unit 61 detects the saturation region $R_{sa}$ of the reflected light image information. The pixel signal output from the light receiving element of the light receiving unit 12 includes saturation information indicating whether the pixel signal is saturated. The saturation region detection unit 61 detects the saturation region $R_{sa}$ by detecting the light receiving element including a saturated pixel signal based on the saturation information. Alternatively, the saturation region detection unit 61 may detect the saturated light receiving element, that is, the saturation region $R_{sa}$ by determining whether the pixel signal is a value indicating pixel signal saturation. Alternatively, the saturation region detection unit 61 may detect the saturation region $R_{sa}$ by determining whether the pixel value Confidence of the reflected light image information is a value indicating saturation of the pixel value Confidence (for example, the pixel value Confidence is zero).

The saturation value estimation unit 62 estimates a correction value used to correct the pixel value Confidence of the reflected light image information by the saturation region compensation unit 63. The saturation value estimation unit 62 estimates the correction value based on the pixel value Confidence of the non-saturation region $R_{nsa}$ adjacent in the surroundings of the saturation region $R_{sa}$, that is, the non-saturation pixel signal adjacent in the surroundings of the saturation region $R_{sa}$.

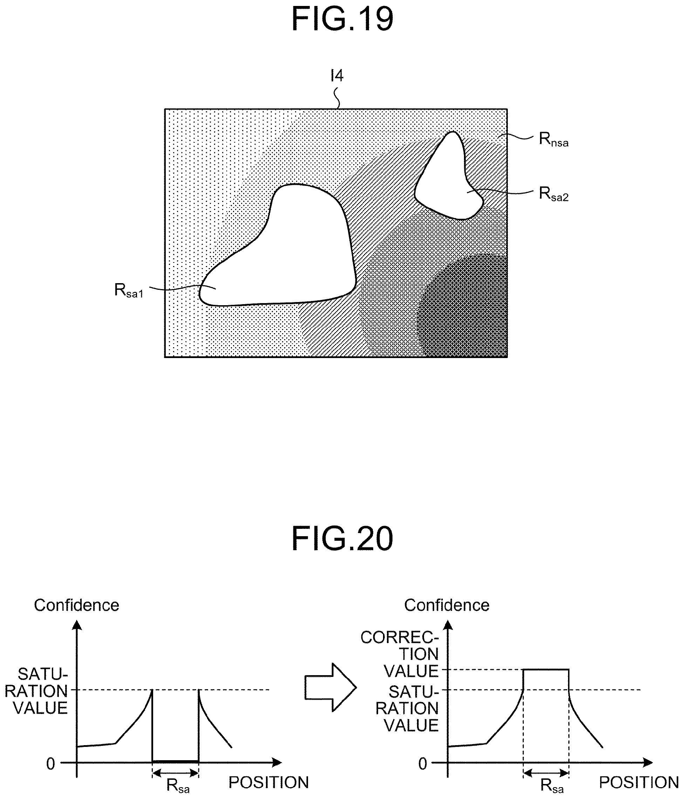

The following will describe, for example, the correction value estimated by the saturation value estimation unit 62 when the saturation region detection unit 61 has detected the first saturation region $R_{sa1}$ and a second saturation region $R_{sa2}$ from reflected light image information 14 illustrated in FIG. 19. Note that FIG. 19 is a diagram illustrating the correction value estimated by the saturation value estimation unit 62. In FIG. 19, in order to increase visibility of the drawing, the saturation region is displayed in white, and the non-saturation region adjacent in the surroundings of the saturation region is indicated by a black line.

The saturation value estimation unit 62 estimates the correction value based on, for example, an average value of the pixel values Confidence of the non-saturation region $R_{nsa}$ (the region indicated by the black line in FIG. 19) adjacent (located) in the surroundings of the first saturation region $R_{sa1}$. The saturation value estimation unit 62 detects a boundary between the first saturation region $R_{sa1}$ and the non-saturation region $R_{nsa}$ by scanning matrix-shaped reflected light image information for each row or column, for example. The saturation value estimation unit 62 detects the pixel value Confidence of the non-saturation region $R_{nsa}$ at the detected boundary. The saturation value estimation unit 62 detects the pixel value Confidence of the non-saturation region $R_{nsa}$ adjacent to the first saturation region $R_{sa1}$ for all the rows and all the columns, thereby detecting all the pixel values Confidence of the non-saturation region $R_{nsa}$ adjacent in the surroundings of the first saturation region $R_{sa1}$. The saturation value estimation unit 62 calculates the average value of the pixel values Confidence of all the detected non-saturation regions $R_{nsa}$ as the average value of the pixel values Confidence of the non-saturation regions $R_{nsa}$ (regions indicated by white lines in FIG. 19) adjacent in the surroundings of the first saturation region $R_{sa1}$.

Here, in the first saturation region $R_{sa1}$, the value of the pixel signal is saturated. Therefore, the actual pixel value Confidence of the first saturation region $R_{sa1}$, that is, the pixel value Confidence in a case where the value of the pixel signal is not saturated is considered to be higher than the pixel value Confidence of the surrounding non-saturation region $R_{nsa}$. In view of this, the saturation value estimation unit 62 estimates, as the correction value, a value obtained by adding a constant value to the average value of the pixel values Confidence of the non-saturation region $R_{nsa}$ (region indicated by the white line in FIG. 19) adjacent in the surroundings of the first saturation region $R_{sa1}$. The saturation value estimation unit 62 also estimates the correction value for the second saturation region $R_{sa2}$ similarly to the first saturation region $R_{sa1}$.

The saturation region compensation unit 63 corrects the pixel value Confidence of the saturation region $R_{sa}$ detected by the saturation region detection unit 61 by using the correction value estimated by the saturation value estimation unit 62. As illustrated in FIG. 20, for example, the saturation region compensation unit 63 corrects the pixel value Confidence by replacing the pixel value Confidence of the saturation region $R_{sa}$ with the correction value.

Note that FIG. 20 is a diagram illustrating correction of the pixel value Confidence by the saturation region compensation unit 63. FIG. 20 illustrates reflected light image information in a predetermined row among pieces of reflected light image information arranged in a matrix, for example. A graph on the left side of FIG. 20 is a graph illustrating the reflected light image information before correction. As illustrated in FIG. 20, in the reflected light image information before correction, the pixel value Confidence of the reflected light image information is zero in the saturation region $R_{sa}$, leading to discontinuity of the graph. To handle this, as illustrated in the graph on the right side, the saturation region compensation unit 63 replaces the pixel value Confidence of the reflected light image information in the saturation region $R_{sa}$ with the correction value. This operation makes it possible to improve discontinuity of the reflected light image information.

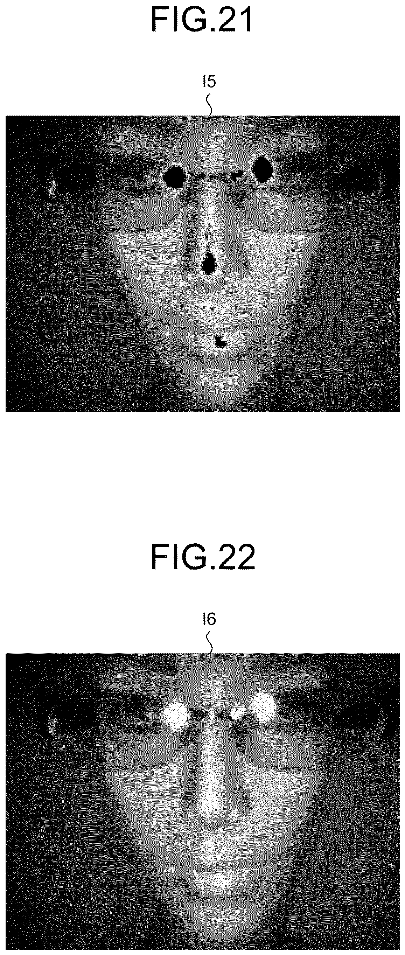

FIG. 21 is a diagram illustrating an example of reflected light image information before correction by the saturation region compensation unit 63. When the light receiving element of the light receiving unit 12 is saturated, a black saturation region $R_{sa}$ occurs in reflected light image information 15, as illustrated in FIG. 21. In this manner, when the saturation region $R_{sa}$ occurs in the reflected light image information 15, for example, there is a possibility of lowering the accuracy of the face authentication by the application unit 20 in the subsequent stage. This is because the application unit 20 might recognize the saturation region $R_{sa}$ as a feature of the reflected light image information 15.

Therefore, in the first embodiment of the present disclosure, as described above, the saturation region compensation unit 63 corrects the pixel value Confidence in the saturation region $R_{sa}$ of the reflected light image information. FIG. 22 is a diagram illustrating an example of reflected light image information after correction by the saturation region compensation unit 63. As illustrated in reflected light image information 16 of FIG. 22, by correcting the saturation region $R_{sa}$ by the saturation region compensation unit 63, the saturation region $R_{sa}$, which has been displayed in black in FIG. 21, is displayed in white. That is, by correcting the saturation region $R_{sa}$ to be displayed white, the discontinuity between the saturation region $R_{sa}$ and the non-saturation region $R_{nsa}$ can be canceled.

In the case of the face authentication, the authentication accuracy is lower at occurrence of discontinuity as illustrated in FIG. 21 than the case having overexposure as illustrated in FIG. 22 in the authentication image. Therefore, by correcting the discontinuity of the reflected light image information by the saturation region compensation unit 63, it is possible to suppress a degradation in the accuracy of the reflected light image information, leading to suppression of a problem caused by the application unit 20 (for example, a decrease in the face authentication system).

<2.3. Correction process in distance measuring device>

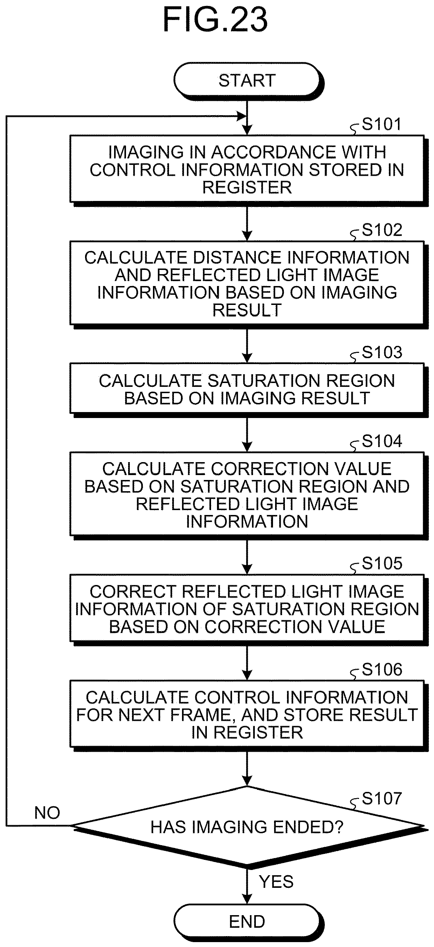

FIG. 23 is a flowchart illustrating an example of correction process in the distance measuring device 10a according to the first embodiment. Such correction process is started, for example, when an imaging start instruction of instructing the start of imaging (distance measurement) is passed from the application unit 20 to the distance measuring device 10a.

First, based on the control signal stored in the register, the control unit 40 of the distance measuring device 10a controls the light source unit 11 and the light receiving unit 12 to perform imaging (step S101). The pixel signal of each of phases obtained by the imaging is passed from the light receiving unit 12 to the control unit 40, the distance measuring unit 50, and the correction unit 60.

The distance measuring unit 50 of the distance measuring device 10a calculates the distance information Depth and the pixel value Confidence of the reflected light image information based on an imaging result obtained in step S101 (step S102). The distance measuring unit 50 of the distance measuring device 10a outputs the calculated distance information Depth to the application unit 20, for example, and outputs the pixel value Confidence of the reflected light image information to the application unit 20 and the correction unit 60.

Next, the saturation region detection unit 61 of the distance measuring device 10a calculates the saturation region $R_{sa}$ of the reflected light image information based on the imaging result obtained in step S101 (step S103). By detecting the light receiving element including the saturated pixel signal, the saturation region detection unit 61 calculates the saturation region $R_{sa}$ of the reflected light image information.

The saturation value estimation unit 62 of the distance measuring device 10a calculates a correction value based on the saturation region $R_{sa}$ calculated in step S103 and the pixel value Confidence of the reflected light image information calculated in step S102 (step S104). More specifically, the saturation value estimation unit 62 estimates, as the correction value, a value obtained by adding a predetermined value to the average value of the pixel values Confidence of the reflected light image information of the non-saturation region $R_{nsa}$ in the surroundings of the saturation region $R_{sa}$.

The saturation region compensation unit 63 of the distance measuring device 10a corrects the pixel value Confidence of the reflected light image information of the saturation region $R_{sa}$ based on the correction value estimated by the saturation value estimation unit 62 in step S104 (step S105). The saturation region compensation unit 63 adds the calculated correction value to the pixel value Confidence of the reflected light image information of the saturation region $R_{sa}$, thereby replacing the value of the pixel value Confidence of the reflected light image information with the correction value.

Based on each pixel signal of each phase captured in step S101, the control unit 40 of the distance measuring device 10a obtains a control signal to control the light source unit 11 and the light receiving unit 12 (step S106). The control unit 40 stores the obtained control signal in a register or the like.

The distance measuring device 10a determines whether the imaging has been completed (step S107). For example, in a case where the distance measuring device 10a has received an imaging end instruction that instructs end of imaging from the application unit 20, the distance measuring device determines that the imaging has ended (step S107, "Yes"). In this case, the distance measuring device 10a ends the correction process.

In contrast, in a case where the distance measuring device 10a has not received the imaging end instruction from the application unit 20 and determines that the imaging has not ended (step S107, "No"), the process returns to step S101. The processes of steps S101 to S107 are repeated, for example, in units of one frame.

In this manner, the distance measuring device 10a (an example of an information processing apparatus) according to the first embodiment includes the correction unit 60 (an example of a control unit). The correction unit 60 detects saturation region $R_{sa}$ of the reflected light image information (an example of the light reception image information) generated based on the pixel signal (an example of the pixel signal) output from the light receiving unit 12 (an example of the light receiving sensor) that receives the reflected light 32 which is a reflection, by the measurement object 31, of the projection light projected from the light source unit 11 (an example of the light source). The pixel signal is used to calculate the distance to the measurement object 31. The saturation region $R_{sa}$ is a region of reflected light image information generated based on a saturated pixel signal. The correction unit 60 corrects the reflected light image information of the saturation region $R_{sa}$ based on the pixel signal.

This makes it possible to improve discontinuity of the light reception image information (the reflected light image information in the first embodiment), leading to suppression of degradation in accuracy of the light reception image information.

<3. Second embodiment>

Next, a second embodiment of the present disclosure will be described. The distance measuring device according to the second embodiment corrects the saturation region $R_{sa}$ of the reflected light image information by using IR image information.

<3.1. Configuration example of distance measuring device>

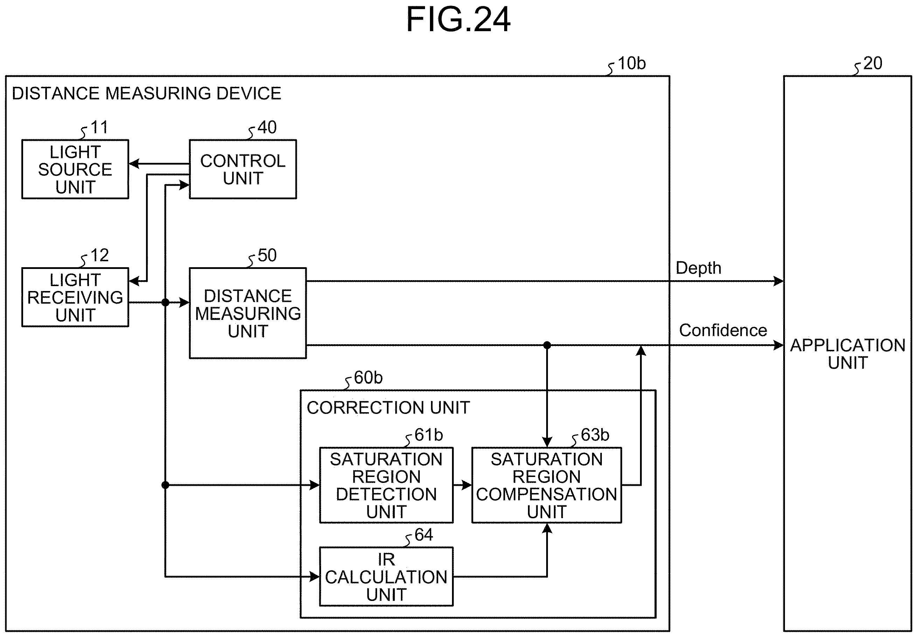

FIG. 24 is a block diagram illustrating an example of functions of a distance measuring device 10b according to the second embodiment. The distance measuring device 10b illustrated in FIG. 24 includes a correction unit 60b instead of the correction unit 60 in FIG. 17. The correction unit 60b does not include the saturation value estimation unit 62 in FIG. 17, but includes an IR calculation unit 64 instead. The correction unit 60b includes a saturation region compensation unit 63b instead of the saturation region compensation unit 63 in FIG. 17. The correction unit 60b may be implemented by operation of a program on the CPU 100 (refer to FIG. 11), or may be actualized by a hardware circuit.

The IR calculation unit 64 calculates IR image information based on a pixel signal output from the light receiving unit 12. Here, the IR image information is calculated based on Formula (11) or Formula (12) described above. The IR image information is calculated by subtracting a DC component such as dark current (dark noise) from the pixel signal. Therefore, even in the saturation region $R_{sa}$, the pixel value IR of the IR image information does not become zero, and the IR image information will be image information maintaining continuity even at occurrence of the saturation region $R_{sa}$.

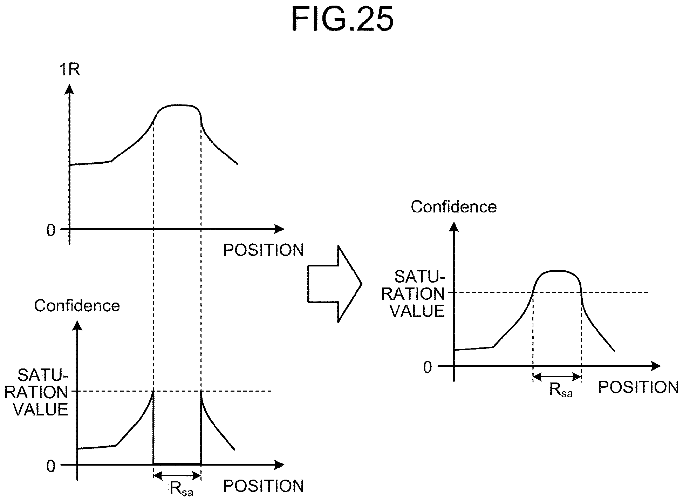

The saturation region compensation unit 63b corrects the reflected light image information of the saturation region $R_{sa}$ based on the reflected light image information and the IR image information. The saturation region compensation unit 63 corrects the reflected light image information in accordance with the gradient (change rate) of the IR image information in the saturation region $R_{sa}$. The correction like this will be described in detail with reference to FIG. 25.

FIG. 25 is a diagram illustrating correction of the saturation region $R_{sa}$ by the saturation region compensation unit 63b. FIG. 25 illustrates a graph corresponding to one row (or one column) of the reflected light image information and the IR image information.

The upper graph on the left side of FIG. 25 is a graph illustrating IR image information generated by the IR calculation unit 64. The graph indicating the IR image information is a continuous graph with no zero value even in the saturation region $R_{sa}$.

A lower graph on the left side of FIG. 25 is a graph indicating reflected light image information generated by the distance measuring unit 50. As described above, the graph indicating the reflected light image information is a discontinuous graph because of a zero value in the saturation region $R_{sa}$.

As described above, the IR image information is information including a component of direct reflected light and a component of ambient light. Furthermore, the reflected light image information is information including a component of direct reflected light. In the same frame, the components of the ambient light are considered to be the same. Accordingly, it is considered that both the component contributing to the change in the pixel value IR of the IR image information and the component contributing to the change in the pixel value Confidence of the reflected light image information are the same, namely, the component of the directly reflected light, having the equal change rate.

In view of this, the saturation region compensation unit 63b according to the present embodiment corrects the pixel value Confidence of the reflected light image information in the saturation region $R_{sa}$ in accordance with the gradient (change rate) of the pixel value IR of the IR image information. Specifically, a correction value of a correction pixel is calculated by multiplying the value of the pixel adjacent to the pixel of the reflected light image information to be corrected (hereinafter, also referred to as a correction pixel) by the change rate of the pixel value IR of the IR image information corresponding to the correction pixel. The saturation region compensation unit 63b corrects the pixel value Confidence of the correction pixel using the calculated correction value.

For example, the saturation region compensation unit 63b calculates the correction value sequentially from the pixel in the saturation region $R_{sa}$ adjacent to the non-saturation region $R_{nsa}$, and calculates the correction values for all the pixels included in the saturation region $R_{sa}$ while sequentially scanning the correction target pixel in the horizontal direction or the vertical direction.

The graph on the right side of FIG. 25 is a graph illustrating reflected light image information after correction by the saturation region compensation unit 63b. As illustrated in FIG. 25, the reflected light image information after correction is a graph having the pixel value Confidence with the same gradient (change rate) as that of the IR image information in the saturation region $R_{sa}$, indicating cancellation of the discontinuity.

In this manner, by correcting the reflected light image information in accordance with the gradient (change rate) of the IR image information by the saturation region compensation unit 63b, it is possible to perform correction according to an actual change in the component of the direct reflected light, leading to further suppression of degradation of accuracy of the reflected light image information.

Although this is a case where the saturation region compensation unit 63b corrects the reflected light image information for each row or column, the correction method is not limited thereto. For example, the saturation region compensation unit 63b may calculate the correction value of the reflected light image information for each row and column. In this case, two correction values corresponding to the row and column directions are calculated for one correction pixel. The saturation region compensation unit 63b may correct the correction pixel using an average value of two correction values, for example.

<3.2. Correction process in distance measuring device>

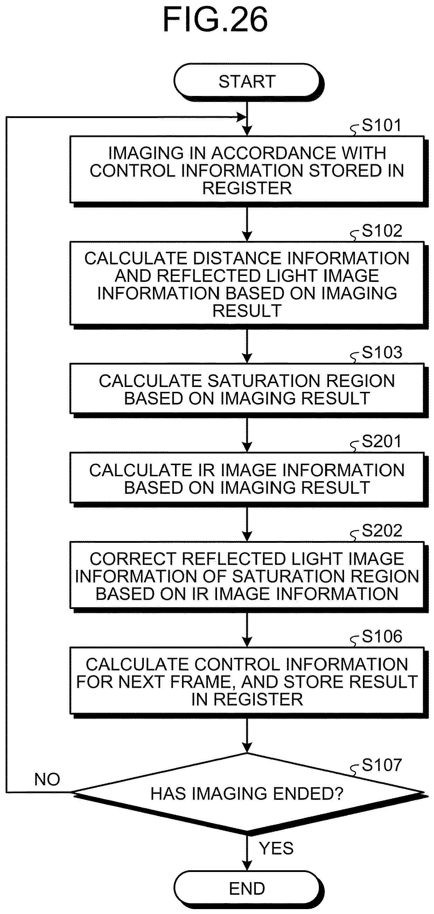

FIG. 26 is a flowchart illustrating an example of correction process in the distance measuring device 10b according to the second embodiment. Similarly to the correction process of FIG. 23, such correction process is started when, for example, an imaging start instruction for instructing the start of imaging (distance measurement) is passed from the application unit 20 to the distance measuring device 10b.

In the flowchart of FIG. 26, the processes of steps S101 to S103 are similar to the corresponding processes of FIG. 23 described above, and thus the detailed description thereof is omitted here. After having obtained a control signal for controlling the light source unit 11 and the light receiving unit 12 in step S103, the distance measuring device 10b proceeds to the process of step S201.

The IR calculation unit 64 of the distance measuring device 10b calculates IR image information based on the imaging result obtained in step S101 (step S201). The IR calculation unit 64 outputs the calculated IR image information to the saturation region compensation unit 63b. Alternatively, the IR calculation unit 64 may output the calculated IR image information to the application unit 20.

The saturation region compensation unit 63b of the distance measuring device 10b corrects the reflected light image information of the saturation region $R_{sa}$ based on the gradient of the IR image information calculated by the IR calculation unit 64 in step S104 (step S202). The saturation region compensation unit 63b corrects the correction pixel by multiplying the pixel value Confidence of the pixel adjacent to the correction pixel by the change rate of the pixel value IR of the IR image information corresponding to the correction pixel.

The control unit 40 of the distance measuring device 10b obtains a control signal to control the light source unit 11 and the light receiving unit 12 based on each pixel signal of each of phases captured in step S101 (step S106). The control unit 40 stores the obtained control signal in a register or the like.

The distance measuring device 10b determines whether imaging has been completed (step S107). For example, in a case where the distance measuring device 10b has received an imaging end instruction that instructs end of imaging from the application unit 20, the distance measuring device determines that the imaging has ended (Step S107, "Yes"). In this case, the distance measuring device 10b ends the correction process.

In contrast, in a case where the distance measuring device 10b has not received the imaging end instruction from the application unit 20 and determines that the imaging has not ended (step S107, "No"), the process returns to step S101. The processes of steps S101 to S107 are repeated, for example, in units of one frame.

In this manner, the distance measuring device 10b (an example of an information processing apparatus) according to the second embodiment includes the correction unit 60b (an example of a control unit). The correction unit 60b corrects the pixel value Confidence in the saturation region of the reflected light image information in accordance with the gradient (change rate) of the pixel value IR of the IR image information. This makes it possible to improve discontinuity of the light reception image information (the reflected light image information in the second embodiment), leading to suppression of degradation in accuracy of the light reception image information.

<4. Third embodiment>

A third embodiment of the present disclosure will be described. A distance measuring device according to the third embodiment corrects the saturation region $R_{sa}$ of the IR image information.

<4.1. Configuration example of distance measuring device>

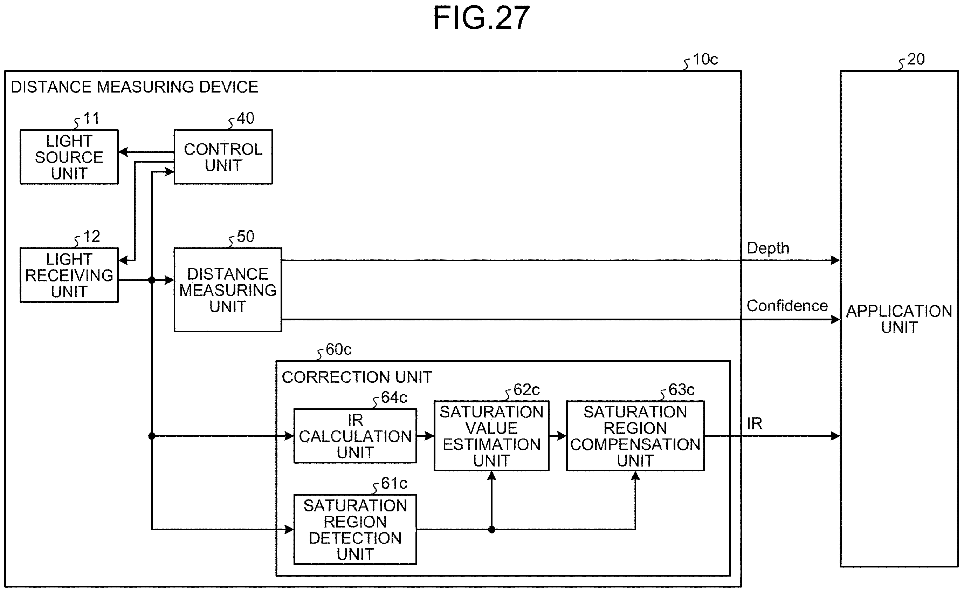

FIG. 27 is a block diagram illustrating an example of functions of a distance measuring device 10c according to the third embodiment. The distance measuring device 10c illustrated in FIG. 27 includes a correction unit 60c instead of the correction unit 60b in FIG. 24. The correction unit 60c includes a saturation value estimation unit 62c instead of saturation value estimation unit 62 in FIG. 17. The correction unit 60c includes a saturation region compensation unit 63 instead of the saturation region compensation unit 63 in FIG. 17. The correction unit 60c may be implemented by operation of a program on the CPU 100 (refer to FIG. 11), or may be actualized by a hardware circuit.

The saturation value estimation unit 62c estimates a correction value of the pixel value IR in the saturation region $R_{sa}$ of the IR image information. The saturation value estimation unit 62c estimates a predetermined value as a correction value, for example. Alternatively, the saturation value estimation unit 62c may estimate the correction value based on the average value of the pixel values IR of the non-saturation region $R_{nsa}$ located in the surroundings of the saturation region $R_{sa}$ in the IR image information. For example, the saturation value estimation unit 62c may estimate the correction value by adding a predetermined value to the average value.

As described above, the IR image information is not discontinuous even in the presence of the saturation region $R_{sa}$. However, even in the IR image information, the pixel value IR is calculated based on the saturated pixel signal in the saturation region $R_{sa}$. Therefore, the pixel value IR in the saturation region $R_{sa}$ would not be a correct value, and becomes a saturated value (a value clipped to a predetermined value). In view of this, in the present embodiment, by correcting the pixel value IR of the saturation region $R_{sa}$ of the IR image information, degradation in accuracy of the IR image information is suppressed.

Although this is a case where that the saturation region detection unit 61 detects the saturation region $R_{sa}$ of the corresponding IR image information by detecting the saturation region $R_{sa}$ of the reflected light image information, the detection method is not limited thereto. For example, the saturation region detection unit 61 may detect the saturation region $R_{sa}$ of the IR image information by determining whether the pixel value IR of the IR image information is a value indicating the saturated pixel value IR.

Furthermore, although this is a case where the correction unit 60c corrects the IR image information, the correction unit 60c may correct the reflected light image information in addition to the IR image information. Since the correction of the reflected light image information is similar to the case of the first and second embodiments, the description thereof will be omitted.

<4.2. Correction process in distance measuring device>

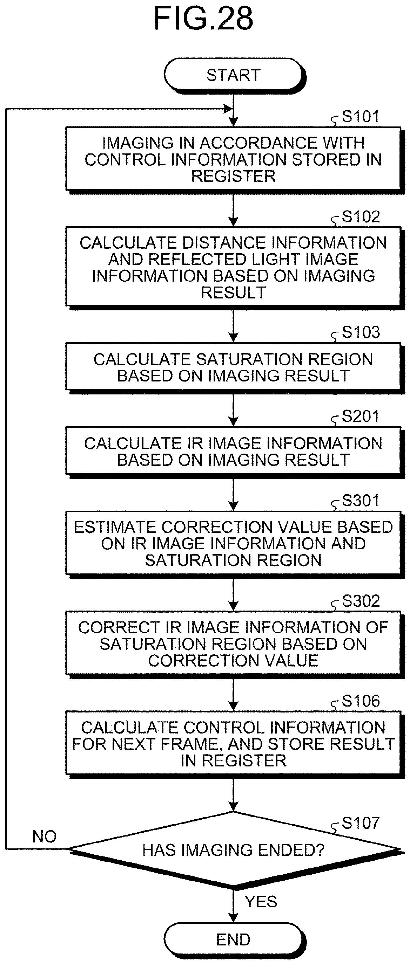

FIG. 28 is a flowchart illustrating an example of correction process in the distance measuring device 10c according to the third embodiment. Similarly to the correction process of FIG. 23, such correction process is started when, for example, an imaging start instruction for instructing the start of imaging (distance measurement) is passed from the application unit 20 to the distance measuring device 10c.

In the flowchart of FIG. 28, the processes of steps S101 to S201 are similar to the corresponding processes of FIG. 26 described above, and thus the detailed description thereof is omitted here. After calculating the IR image information in step S201, the distance measuring device 10c proceeds to the process of step S301.

The saturation value estimation unit 62c of the distance measuring device 10c calculates a correction value based on the saturation region $R_{sa}$ calculated in step S103 and the IR image information calculated in step S201 (step S301).

A saturation region compensation unit 63c of the distance measuring device 10c corrects the IR image information of the saturation region $R_{sa}$ based on the correction value calculated by the saturation value estimation unit 62c in step S301 (step S302).

The control unit 40 of the distance measuring device 10c obtains a control signal to control the light source unit 11 and the light receiving unit 12 based on each pixel signal of each of phases captured in step S101 (step S106). The control unit 40 stores the obtained control signal in a register or the like.

The distance measuring device 10c determines whether imaging has been completed (step S107). For example, in a case where the distance measuring device 10a has received an imaging end instruction that instructs end of imaging from the application unit 20, the distance measuring device determines that the imaging has ended (step S107, "Yes"). In this case, the distance measuring device 10c ends the correction process.

In contrast, in a case where the distance measuring device 10c has not received the imaging end instruction from the application unit 20 and determines that the imaging has not ended (step S107, "No"), the process returns to step S101. The processes of steps S101 to S107 are repeated, for example, in units of one frame.

In this manner, the distance measuring device 10c (an example of an information processing apparatus) according to the third embodiment includes the correction unit 60c (an example of a control unit). The correction unit 60c corrects a pixel value in a saturation region of IR image information (an example of light reception image information). This makes it possible to suppress degradation in accuracy of the light reception image information (IR image information in the third embodiment).

<5. Modification>

Although the first embodiment has been described as a case where the distance measuring device 10a is configured as a hardware device by the electronic device 1 including the CPU 100, the ROM 101, the RAM 102, the UI unit 104, the storage 103, the I/F 105, and the like, the configuration is not limited to this example. For example, it is also possible to incorporate the distance measuring device 10a including the control unit 40, the distance measuring unit 50, and the correction unit 60 illustrated in FIG. 17 on the sensor unit 111 formed by stacking semiconductor chips illustrated in FIG. 11 or 12 so as to be configured as one semiconductor element as a whole. This is similarly applicable to the distance measuring devices 10b and 10c according to the second and third embodiments.

Furthermore, although the above embodiment has been described as a case where the pixel value Confidence of the reflected light image information is zero in the saturation region $R_{sa}$, the operation is not limited thereto. For example, in a case where the pixel signal in each of phases of the light receiving unit 12 is partially saturated, the pixel value Confidence of the reflected light image information might not be zero. However, even in this case, the pixel value Confidence of the reflected light image information is calculated based on the saturated pixel signal, and thus, the pixel value Confidence includes an error, leading to the possibility of occurrence of discontinuous reflected light image information. Therefore, even in a case where a part of the pixel signal in each phase of the light receiving unit 12 is saturated as described above, the correction process by the correction units 60 and 60b may be performed.

Moreover, although the above embodiment is a case where the correction of the light reception image information is performed by the correction units 60, 60b, and 60c, the correction method is not limited thereto. For example, the application unit 20 may correct the light reception image information. In this case, the electronic device 1 of FIG. 1 functions as an information processing apparatus that corrects light reception image information.

Alternatively, the correction units 60, 60b, and 60c of the above embodiments may be implemented by a dedicated computer system or a general-purpose computer system.

For example, a program for executing the above-described operations of the correction process is stored in a computer-readable recording medium such as an optical disk, semiconductor memory, a magnetic tape, or a flexible disk or hard disk and distributed. The program is installed on a computer and the above processes are executed to achieve the configuration of information processing apparatus including the correction unit 60. At this time, the information processing apparatus may be an external device (for example, a personal computer) of the electronic device 1. Furthermore, the information processing apparatus may be a device (for example, the control unit 40) inside the electronic device 1.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the sections other than the OS may be stored in a medium for distribution, or the sections other than the OS may be stored in a server device so as to be downloaded to a computer, for example.

Furthermore, among each process described in the above embodiments, all or a part of the processes described as being performed automatically may be manually performed, or the processes described as being performed manually can be performed automatically by a known method. In addition, the processing procedures, specific names, and information including various data and parameters illustrated in the above Literatures or drawings can be arbitrarily altered unless otherwise specified. For example, various types of information illustrated in each of the drawings are not limited to the information illustrated.

In addition, each of the components of each of the illustrated devices is provided as a functional and conceptional illustration and thus does not necessarily have to be physically configured as illustrated. That is, the specific form of distribution/integration of each of devices is not limited to those illustrated in the drawings, and all or a part thereof may be functionally or physically distributed or integrated into arbitrary units according to various loads and use conditions.

<6. Conclusion>

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and a modification as appropriate.

The effects described in individual embodiments of the present specification are merely examples, and thus, there may be other effects, not limited to the exemplified effects.

Note that the present technology can also have the following configurations.

(1) An information processing apparatus comprising a control unit configured to execute processes including:

detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and
correcting the light reception image information of the saturation region based on the pixel signal.

(2) The information processing apparatus according to (1),
wherein the light reception image information is image information generated in accordance with a component of the reflected light contained in the pixel signal.
(3) The information processing apparatus according to (1),
wherein the light reception image information is image information generated in accordance with a component of the reflected light and a component of ambient light, contained in the pixel signal.
(4) The information processing apparatus according to (2) or (3),
wherein the control unit corrects the pixel value of the saturation region based on a pixel value of the light reception image information adjacent to the saturation region in a non-saturation region where the pixel signal is not saturated.
(5) The information processing apparatus according to (4), wherein the control unit corrects the pixel value in the saturation region using a correction value calculated based on an average value of the pixel values of the light reception image information located in surroundings of the saturation region in the non-saturation region where the pixel signal is not saturated.
(6) The information processing apparatus according to (5),
wherein the correction value is a value larger than the average value.
(7) The information processing apparatus according to (4),
wherein the control unit corrects the pixel value in the saturation region in accordance with a change rate of a reception light value calculated based on the component of the reflected light and the component of the ambient light, contained in the pixel signal.
(8) A correction method comprising:

detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and
correcting the light reception image information of the saturation region based on the pixel signal.

(9) A program for causing a computer to function as a control unit that executes processes comprising:

detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and
correcting the light reception image information of the saturation region based on the pixel signal.

Reference Signs List

1 ELECTRONIC DEVICE
10, 10a, 10b, 10c DISTANCE MEASURING DEVICE
11 LIGHT SOURCE UNIT
12 LIGHT RECEIVING UNIT
13 DISTANCE MEASUREMENT PROCESSING UNIT

20 APPLICATION UNIT
40 CONTROL UNIT
50 DISTANCE MEASURING UNIT
60, 60b, 60c CORRECTION UNIT
61 SATURATION REGION DETECTION UNIT
62, 62c SATURATION VALUE ESTIMATION UNIT
63, 63b, 63c SATURATION REGION COMPENSATION UNIT
64 IR CALCULATION UNIT

**Claims**

1. An information processing apparatus comprising a control unit configured to execute processes including:

   detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and
   correcting the light reception image information of the saturation region based on the pixel signal.

2. The information processing apparatus according to claim 1,
   wherein the light reception image information is image information generated in accordance with a component of the reflected light contained in the pixel signal.

3. The information processing apparatus according to claim 1,
   wherein the light reception image information is image information generated in accordance with a component of the reflected light and a component of ambient light, contained in the pixel signal.

4. The information processing apparatus according to claim 2,
   wherein the control unit corrects the pixel value of the saturation region based on a pixel value of the light reception image information adjacent to the saturation region in a non-saturation region where the pixel signal is not saturated.

5. The information processing apparatus according to claim 4,
   wherein the control unit corrects the pixel value in the saturation region using a correction value calculated based on an average value of the pixel values of the light reception image information located in surroundings of the saturation region in the non-saturation region where the pixel signal is not saturated.

6. The information processing apparatus according to claim 5,
   wherein the correction value is a value larger than the average value.

7. The information processing apparatus according to claim 4,
   wherein the control unit corrects the pixel value in the saturation region in accordance with a change rate of a reception light value calculated based on the component of the reflected light and the component of the ambient light, contained in the pixel signal.

8. A correction method comprising:

   detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and
   correcting the light reception image information of the saturation region based on the pixel signal.

9. A program for causing a computer to function as a control unit that executes processes comprising:

   detecting a saturation region of light reception image information generated based on a pixel signal output from a light receiving sensor, the light receiving sensor being configured to receive reflected light being reflection, by a measurement object, of projection light projected from a light source, the pixel signal being configured to be used to calculate a distance to the measurement object, the saturation region being a region of the light reception image information generated based on the pixel signal which is saturated; and

correcting the light reception image information of the saturation region based on the pixel signal.

# FIG.1

# FIG.2

# FIG.3

PROJECTION
LIGHT

REFLECTED
LIGHT

$\Phi=0°$

$C_0$

$\Phi=90°$

$C_{90}$

$\Phi=180°$

$C_{180}$

$\Phi=270°$

$t_0$   $t_1$   $t_2$   $t_3$

$C_{270}$

# FIG.4

RECEIVED
LIGHT

DIRECT
REFLECTED
LIGHT

AMBIENT
LIGHT

DARK NOISE

TIME

# FIG.5

# FIG.6

# FIG.7

# FIG.8

# FIG.9

# FIG.10

# FIG.11

2

ROM 101

RAM 102

LIGHT SOURCE UNIT 110

CPU 100

SENSOR UNIT 111

I/F 105

UI UNIT 104

STORAGE 103

# FIG.12

111

# FIG.13

# FIG.14

# FIG.15

# FIG.16

EP 4 036 521 A1

# FIG.17

# FIG.18

DISTANCE D1

DISTANCE D2

DIRECT REFLECTED
LIGHT COMPONENT

AMBIENT LIGHT
COMPONENT

DARK NOISE
COMPONENT

EP 4 036 521 A1

# FIG.19

# FIG.20

# FIG.21

I5

# FIG.22

I6

# FIG.23

START

S101
IMAGING IN ACCORDANCE WITH
CONTROL INFORMATION STORED IN
REGISTER

S102
CALCULATE DISTANCE INFORMATION
AND REFLECTED LIGHT IMAGE
INFORMATION BASED ON IMAGING
RESULT

S103
CALCULATE SATURATION REGION
BASED ON IMAGING RESULT

S104
CALCULATE CORRECTION VALUE
BASED ON SATURATION REGION AND
REFLECTED LIGHT IMAGE
INFORMATION

S105
CORRECT REFLECTED LIGHT IMAGE
INFORMATION OF SATURATION REGION
BASED ON CORRECTION VALUE

S106
CALCULATE CONTROL INFORMATION
FOR NEXT FRAME, AND STORE RESULT
IN REGISTER

S107
NO
HAS IMAGING ENDED?

YES

END

FIG.24

EP 4 036 521 A1

# FIG.25

# FIG.26

START

S101

IMAGING IN ACCORDANCE WITH
CONTROL INFORMATION STORED IN
REGISTER

S102

CALCULATE DISTANCE INFORMATION
AND REFLECTED LIGHT IMAGE
INFORMATION BASED ON IMAGING
RESULT

S103

CALCULATE SATURATION REGION
BASED ON IMAGING RESULT

S201

CALCULATE IR IMAGE INFORMATION
BASED ON IMAGING RESULT

S202

CORRECT REFLECTED LIGHT IMAGE
INFORMATION OF SATURATION REGION
BASED ON IR IMAGE INFORMATION

S106

CALCULATE CONTROL INFORMATION
FOR NEXT FRAME, AND STORE RESULT
IN REGISTER

S107

NO ← HAS IMAGING ENDED?

YES

END

# FIG.27

EP 4 036 521 A1

# FIG.28

START

S101

IMAGING IN ACCORDANCE WITH
CONTROL INFORMATION STORED IN
REGISTER

S102

CALCULATE DISTANCE INFORMATION
AND REFLECTED LIGHT IMAGE
INFORMATION BASED ON IMAGING
RESULT

S103

CALCULATE SATURATION REGION
BASED ON IMAGING RESULT

S201

CALCULATE IR IMAGE INFORMATION
BASED ON IMAGING RESULT

S301

ESTIMATE CORRECTION VALUE BASED
ON IR IMAGE INFORMATION AND
SATURATION REGION

S302

CORRECT IR IMAGE INFORMATION OF
SATURATION REGION BASED ON
CORRECTION VALUE

S106

CALCULATE CONTROL INFORMATION
FOR NEXT FRAME, AND STORE RESULT
IN REGISTER

S107

NO ◁ HAS IMAGING ENDED?

YES

END

<div style="text-align:center">**INTERNATIONAL SEARCH REPORT**</div>

| International application No. |
| --- |
| PCT/JP2020/029674 |

**A. CLASSIFICATION OF SUBJECT MATTER**
Int.Cl. G01C3/06(2006.01)i, G01S7/486(2020.01)i, G01S17/10(2020.01)i, G01S17/89(2020.01)i
FI: G01S17/10, G01S17/89, G01S7/486, G01C3/06120Q, G01C3/06140
According to International Patent Classification (IPC) or to both national classification and IPC

**B. FIELDS SEARCHED**

Minimum documentation searched (classification system followed by classification symbols)
Int.Cl. G01S7/48-G01S7/51, G01S17/00-G01S17/95, G01B11/00-G01B11/30, G01C3/00-G01C3/32, G06T1/00-G06T19/20, H04N5/222-H04N5/378, H04N9/04-H04N9/11

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

**C. DOCUMENTS CONSIDERED TO BE RELEVANT**

| Category | Citation of document, with indication, where appropriate, of the relevant passages | Relevant to claim No. |
| --- | --- | --- |
| X | JP 2016-183922 A (FUJIFILM CORPORATION) 20.10.2016 (2016-10-20), paragraphs [0001], [0030], [0082], [0083], claim 1 | 1-2, 4, 8-9 |
| Y | | 3, 5-7 |
| Y | JP 2018-077071 A (RICOH CO., LTD.) 17.05.2018 (2018-05-17), paragraph [0062] | 3, 7 |
| Y | JP 2008-061033 A (SANYO ELECTRIC CO., LTD.) 13.03.2008 (2008-03-13), paragraph [0057] | 5-6 |

☐ Further documents are listed in the continuation of Box C.   ☒ See patent family annex.

| | |
| --- | --- |
| Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 01.10.2020 | 13.10.2020 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| International application No. |
| --- |
| PCT/JP2020/029674 |

```
JP 2016-183922 A   20.10.2016   (Family: none)

JP 2018-077071 A   17.05.2018   (Family: none)

JP 2008-061033 A   13.03.2008   (Family: none)
```

Form PCT/ISA/210 (patent family annex) (January 2015)

**EP 4 036 521 A1**